(19) Europäisches Patentamt
European Patent Office
Office européen des brevets

(11) Publication number: 0 273 924 B1

(12) EUROPEAN PATENT SPECIFICATION

(45) Date of publication of the patent specification: 28.02.90

(51) Int. Cl.[5]: G 01 G 23/01, G 01 G 23/16

(21) Application number: 87903638.2

(22) Date of filing: 12.05.87

(86) International application number: PCT/US 87/01152

(87) International publication number: WO 87/07370 (03.12.87 Gazette 87/27)

# (54) METHOD OF CALIBRATING AN ELECTRONIC SCALE.

(30) Priority: 27.05.86 US 867852
27.05.86 US 868925
27.05.86 US 868926

(43) Date of publication of application: 13.07.88 Bulletin 88/28

(45) Publication of the grant of the patent: 28.02.90 Bulletin 90/09

(84) Designated Contracting States: DE FR GB

(56) References cited:
EP-A-0 131 461
US-A-4 512 429

(73) Proprietor: NCR CORPORATION
World Headquarters
Dayton, Ohio 45479 (US)

(72) Inventor: AMACHER, Gene, L.
136 Merrick Road
Cambridge, OH 43725 (US)
Inventor: MATHES, Gene, Raymond
2930 Lovers Lane
Zanesville, OH 43701 (US)
Inventor: PAUGSTAT, John, Frederick
17688 Gottengen Road
Salesville, OH 43778 (US)

(74) Representative: Robinson, Robert George
International Patent Department NCR Limited 206 Marylebone Road
London NW1 6LY (GB)

EP 0 273 924 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBERGRAF, STOCKHOLM 1990

## Description

### Technical Field

The present invention is concerned with a method of calibrating an electronic scale such as may be required to meet Federal standards concerning the accuracy of the scale. The invention is also concerned with a method of zero balancing the scale following a calibration procedure.

### Background Art

Electronic scales are found in supermarkets or the like for weighing produce or other merchandise items and must meet stringent requirements as to performance and cost. The scales must be accurate enough to satisfy public weights and measures authorities. These requirements are usually met at the time the scale is manufactured by means of a calibrating procedure. When through use, the scale becomes disabled and must be recalibrated, it has been common in the past for the calibration sequence to take place under the supervision of an authorized serviceman at the business location where the scale is being used. Prior methods for calibrating a scale have involved a trial and error procedure which is slow and cumbersome, thereby increasing the down time of the scale which is costly to the owner of the scale.

### Disclosure of the Invention

One object of the invention is to provide a method of calibrating an electronic scale which is simple in its operation and can be accomplished in a minimum amount of time.

Another object of the invention is to provide a simple and rapid method of recalibrating an electronic scale where the initial calibration of the scale has taken place outside an enclosure, such as a check-out counter, in which the scale is eventually installed.

A further object of the invention is to provide a simple and effective method of zero balancing an electronic scale after calibration.

According to one aspect of the invention there is provided a method of calibrating an electronic scale arranged to output an n-bit binary signal as a representation of an item being weighed, where n is an integer, characterized by the steps of putting the scale into a first weighted condition, storing a first n-bit binary signal representative of said first weighted condition, comparing the bits of said first binary signal with the settings of a first set of n manually settable switches, each settable to a first position representative of a first binary digit or a second position representative of the other binary digit, changing, as necessary, the settings of said first set of switches, in accordance with instructions displayed on display means, so as to bring the settings of said first set of switches into conformity with said first binary signal, putting the scale into a second weighted condition, storing a second n-bit binary signal representative of said second weighted condition, comparing the bits of said second binary signal with the settings of a second set of manually settable switches, each settable to a first position representative of said first binary digit or a second position representative of said other binary digit, and changing, as necessary, the settings of said second set of switches, in accordance with instructions displayed on said display means, so as to bring the settings of said second set of switches into conformity with said second binary signal.

According to another aspect of the invention there is provided a method in accordance with the immediately preceding paragraph, characterized in that there is carried out a recalibration of the scale including the steps of mounting the scale in an enclosure, putting the scale into a first weighted condition, storing a third n-bit binary signal representative of said first weighted condition, putting the scale into a second weighted condition, storing a fourth n-bit binary signal representative of said second weighted condition, removing the scale from said enclosure, comparing the bits of said third binary signal with the settings of said first set of switches and the bits of said fourth binary signal with the settings of said second set of switches, changing, as necessary, the settings of said first and second sets of switches, in accordance with instructions displayed on said display means, so as to bring the settings of said first set of switches into conformity with said third binary signal and the settings of said second set of switches into conformity with said fourth binary signal, and remounting the scale in said enclosure.

According to a further aspect of the invention there is provided a method in accordance with the last one of the preceding paragraphs, characterized in that said second weighted condition corresponds to zero weight being present on the scale, and in that there is carried out a zero balancing of the scale including the steps of storing a first average of a plurality of n-bit binary signals representative of said second weighted condition in a first register, checking that successive n-bit binary signals representative of said second weighted condition differ from each other by less than a predetermined amount, storing a current n-bit binary signal representative of said second weighted condition in a second register, checking that the value of the signal in said second register lies within a predetermined range of the value of the signal in said first register, storing a second average in said first register taking into account the value of the signal in said second register, and checking that said second average lies within a predetermined range of the value represented by the settings of said second set of switches.

**Brief Description of the Drawings**

Embodiments of the invention will now be described by way of example with reference to the accompanying drawings, in which:

- Fig. 1 is a perspective view of a check-out system which includes an electronic scale for weighing purchased merchandise items;
- Fig. 2 is a schematic representation of the check-out system of Fig. 1 in which a microprocessor is used in the calibration of the scale;
- Fig. 3 is a functional block diagram of the check-out system of Fig. 1;
- Fig. 4 is a schematic view similar to Fig. 2 showing a system for calibrating the scale using an external processor;
- Fig. 5 is a block diagram of a first part of a RAM memory unit showing memory locations employed in a method of calibrating the scale;
- Fig. 6 is a view of a customer display showing the display of price information of a scanned merchandise item and instructions for placing a predetermined weight on the scale and the setting of switches to be set;
- Fig. 7 is a view of the customer display showing the display of the weight of a purchased item and instructions for placing a predetermined weight on the scale;
- Fig. 8 is a schematic graph illustrating the output of load cells of the scale in accordance with the weight placed on the scale;
- Fig. 9 is a diagram showing how Figs. 10A – 10D inclusive are assembled;
- Figs. 10A – 10D inclusive are flow charts illustrating diagrammatically the steps of a calibrating procedure of the present invention;
- Fig. 11 is a block diagram of another part of the RAM memory unit showing a counter and memory locations employed in a method of recalibrating the scale;
- Fig. 12 is a diagram showing how Figs. 13A – 13E inclusive are assembled;
- Figs. 13A – 13E inclusive are flow charts illustrating diagrammatically the steps of a recalibrating procedure of the present invention;
- Fig. 14 is a block diagram of a further part of the RAM memory unit showing the memory locations of storage registers associated with a zero balancing procedure;
- Fig. 15 is a schematic representation of the load limits that may be applied to the scale;
- Fig. 16 is a diagram showing how Figs. 17A – 17E inclusive are assembled;
- Figs. 17A – 17E inclusive are flow charts illustrating diagrammatically the steps of a zero balancing procedure of the present invention; and
- Fig. 18 is a view of the customer display showing the display of the weight of a purchased item and a scale ready logo.

**Best Mode for Carrying out the Invention**

Referring now to Fig. 1, there is shown a perspective view of a merchandise check-out system generally indicated by the numeral 20 in which a scale 22 is utilized to weigh a purchased item. The scale is located within a check-out counter 24 and includes a scale lid or load plate 26 movably mounted flush with the top surface 28 of the check-out counter 24. The scale lid 26 includes an aperture 30 through which a scanning beam from a scanner assembly 36 (Fig. 2), mounted beneath the scale within the check-out counter, is projected for scanning a bar code label (not shown) on a merchandise item positioned on the scale lid 26 in a manner that is well known in the art. Mounted adjacent the scale lid 26 on the surface 28 of the check-out counter 24 is a housing member 31 in which is located a customer display 32 which displays the price 33 (Fig. 6) of a merchandise item scanned and also the weight 29 (Fig. 7) of an item as the result of a weighing operation. Located adjacent to either side of the display 32 within the housing 31 are a pair of signal lights 98, 100, one red and one green, respectively, which are operated to indicate whether a weighing operation or a scanning operation has been successful or not. Opposite the housing 31, on the surface 28 of the counter 24, is a housing 38 in which are located a pair of photo-electric cells 40, 42 which detect the entrance and the exit of the merchandise item on the lid 26. A pair of light emitting diodes (not shown) located in the housing member 31 direct light beams at the cells 40 and 42 in a manner that is well known in the art. Mounted adjacent the check-out counter 24 is a data terminal device 44 for processing the sales transaction which includes a keyboard 46 and a display 48. The display 32 is an alphanumeric LCD display and can be operated automatically or by the manual operation of keys on the keyboard 46.

Referring now to Fig. 2, there is shown a schematic representation of the check-out system 20 (Fig. 1) in which the scale 22 includes four load cells 50 secured to the scale lid 26 and which output identical analog voltage signals over lines 52 to an amplifier 54 in response to the placing of a weighted item on the lid 26. The amplified analog signals are then transmitted to an A/D converter 56 which outputs digital signals at regular intervals over line 58 to a microprocessor 60. The microprocessor includes a ROM memory unit 62 in which are stored programs for calibrating and zero balancing the scale 22 and a RAM memory unit 64 in which data used in calibrating and zero balancing the scale is stored as will be described more fully hereinafter. The microprocessor 60 is connected to six banks of switches 66a – 66f inclusive over cable 68; to the scanner assembly 36 over bus 70; to the terminal 44 over bus 72; and to the display 32, the signal lights 98, 100 and a tone generator 74 over bus 76. The microprocessor 60 monitors the operation of the scanner assembly 36 over bus 70.

When the scanner is in operation, the microprocessor 60 controls the display 32 to display the item price or total sale 33 (Fig. 6) in response to data received from the terminal 44. The microprocessor 60 will also control the display 32 to display the item weight 29 (Fig. 7) in response to a scale operation. The microprocessor 60 further controls the signal lights 98, 100 and the tone generator 74 in response to the operation of the scanner and the scale indicating a valid or invalid operation.

Referring now to Fig. 3, there is disclosed a more detailed functional block diagram of the check-out system 20 in which the scanner assembly 36 (Fig. 2) includes a laser light 78 which outputs a light beam 80 through a shutter assembly 82 to a rotating optical assembly 84 which in turn directs the reflected light beam through the aperture 30 (Fig. 1) in the scale lid 26. The scanning light beam scans the bar code label on a merchandise item positioned on the lid 26. The light beam is then reflected from the bar code label back through the aperture 30 to a photo-detector 86 which outputs an analog signal representing the coded data read over the bus 88 to an analog circuit section 90 where the signals are amplified and transferred to a digital circuit section 92. The digital circuit section 92 converts the analog signals to digital data signals. The data signals are then transferred to a scanner microprocessor 94. The microprocessor 94 also receives signals over bus 95 from the enter item gate 40 and the exit item gate 42 indicating the presence of a merchandise item. In response to receiving the signals from the item gate 40, the microprocessor 94 operates the shutter assembly 82 allowing the laser beam to scan the merchandise item. A signal from the exit item gate 42 turns off the shutter assembly.

The microprocessor 94 using the data received determines whether a good or bad read operation has occurred. If a bad read operation has occurred, the microprocessor 94 will output a control signal over bus 70 to the microprocessor 60 which operates the red lamp 98 by transmitting the appropriate signals over bus 112, a communication interface 104 and bus 76 to the lamp 98. The red lamp 98 indicates to the operator that the merchandise item should be rescanned. If a good read has occurred, the green lamp 100 is illuminated and the tone generator 74 is operated to output a sound signal indicating to the operator that a good read has occurred. For a complete disclosure of the operation of the item gates 40, 42 and the lamps 98, 100, reference should be made to U.S. Patent No. 4 086 476.

The data signals received by the microprocessor 94 identify the merchandise item being scanned. This information is transmitted over bus 102 to the communication interface 104 which transfers the data over bus 106 to a remote processor 108. The processor 108 using this data retrieves the price of the item from a price look-up table (not shown) located within the processor 108 and transmits the price of the item to the microprocessor 94 through the interface 104 and bus 102. The price of the item is then transmitted over bus 76, displayed in the customer digital display 32 and transmitted over bus 72 to the display 48 (Fig. 1) in the terminal 44. Power is supplied to the system by a power supply 114.

The scale 22 includes the load plate 26 (Fig. 1), the load cells 50 (Fig. 2), the microprocessor 60, the ROM memory unit 62 in which are stored the programs for zero balancing and calibrating the scale, and a digital circuit section 110 by which the memory unit 62 interfaces with the microprocessor 60.

When a scale operation is required, the operator places the item to be weighed on the load plate 26 (Fig. 2) which transfers the load to the load cells 50. The cells 50 output the analog voltage signals to the amplifier 54 (Fig. 2) and thence to the A/D converter 56 (Figs. 2 and 3). The microprocessor 60 computes the weight from the digital signals outputted by the A/D converter 56, utilizing reference data stored in the switches 66a – 66d, and actuates the digital display 32 to display the weight. The weight data is also transmitted over bus 112 to the communication interface 104 which transfers the data to the terminal 44 over bus 72. The terminal obtains the price per pound data from the remote processor 108 through the interface 104 and computes the item price, prints the item price on the customer receipt, displays the item price in the terminal display 48 (Fig. 1) and transmits the item price to the scanner microprocessor 94 which displays the price in the customer digital display 32. The microprocessor 94 will operate the green lamp 100 and the tone generator 74 through the microprocessor 60 if the operation is a good weighing operation and the red lamp 98 if it is a bad weighing operation.

Referring now to Fig. 4, there is disclosed a schematic representation of a system for calibrating the scale 22 at the time the scale is manufactured, with the scale 22 outside the check-out counter 24. As previously described with respect to Fig. 2, the scale includes the lid or load plate 26, the load cells 50, the analog amplifier 54, the A/D converter 56 and the banks of switches 66a – 66f inclusive. The switches and the A/D converter 56 are connected by means of cables 68 and 58 respectively to a remote processor 116 which includes a ROM memory unit 62 (which is the same as the ROM 62 in Fig. 2) in which is stored the calibration program and a RAM memory unit 64 (which is the same as the RAM 64 in Fig. 2) in which data associated with the calibration procedure is stored. The processor 116 outputs data over line 118 to a display 120 for displaying instructions to the operator to set switches in the switch banks 66a – 66d inclusive as will be described more fully hereinafter.

Referring now to Fig. 5, there is shown a schematic representation of part of the RAM memory unit 64 (Figs. 2 and 4) showing the location of various storage registers used in the present method for calibrating the scale 22. Included in the memory unit 64 is a twenty pound (9.07 kgs) storage register 122 in which is stored the previous reading of the A/D converter 56 (Figs. 2 and 4) when twenty pounds is placed on the scale. In a similar manner, the previous reading of the output of the A/D converter when no weight is on the scale is stored in a register 124. The current output of the A/D converter 56 is stored in a register 126. A register 128 has stored therein certain weight limits which are used by the microprocessor 60 (Fig. 2) or the processor 116 (Fig. 4) to qualify the output readings of the A/D converter as will be described more fully hereinafter.

Referring now to Fig. 8, there is shown a graph illustrating the output of each load cell 50 in microvolts in accordance with the weight positioned on the scale lid 26. As shown in the figure, there is a straight line relationship between the weight applied and the load cell output. In the diagram, X represents the recorded output for zero pounds, Y the recorded output for 30 pounds (13.61 kgs), and Xi the recorded output for a given weight, the net weight in pounds being equal to 30·(Xi-X)/(Y-X). As will be disclosed more fully hereinafter, the voltage output signals of the load cells 50 (Figs. 2 and 4) are converted to binary data signals by the A/D converter 56. The converter 56 transmits the digital data signals to the microprocessor 60 (Fig. 2) when the calibration procedure occurs at the point of installation and the processor 116 (Fig. 4) when the calibration takes place at the completion of the scale assembly. The digital data signals are used by the processors 68 and 116 as a representation of the voltage output of the load cells when two weights conditions such as twenty pounds (9.07 kgs) or zero pounds are applied to the scale. The corresponding digital values are then set up in the banks of switches 66a – 66d inclusive (Figs. 2 and 4) in the course of a calibration procedure. Each bank of switches 66a – 66d inclusive comprises eight individual switches 130 in which each switch is movable between two positions. One position will represent a binary one and the other position a binary zero. The banks of switches 66a and 66b when set will represent a sixteen bit value representing the digital equivalent of the voltage output of the load cells 50 when twenty pounds is positioned on the scale 22. In a similar manner, the switch banks 66c and 66d when set will represent the voltage output of the load cells when no weight is placed on a scale. Switch banks 66e and 66f contain switches 132 which are used to select features of the scale such as selecting whether the display 32 will display pounds or kilograms. While the weights used in the present example are 20 lbs. (9.07 kgs) and 0 lbs., other weights such as 30 lbs. (13.60 kgs) and 15 lbs. (6.80 kgs) may be used in the calibration procedure.

Referring to Figs. 10A – 10D inclusive, there is disclosed a flow chart diagrammatically illustrating the steps of the calibration procedure of the present invention. At the start of the calibration operation, (block 133) (Fig. 10A), the operator will set all the switches 130 in the switch banks 66a-66d inclusive to a zero position (block 134) and then turn on the power to the scale (block 135). The processor 116 (Fig. 4) or 60 (Fig. 2) in response to the turning on of the power to the scale will read the switch settings (block 136) to determine if the switch settings are in the zero position (block 138). If the switch settings are not in the zero position, the processor will go into a normal weighing operation and display zero pounds, notifying the operator to turn off the power to the scale (block 140) and return over path 141 to set the switches to a zero position (block 134). If the processor finds that the switch settings are all in a zero position, the processor will clear the twenty pound (9.07 kgs) storage register 122 (Fig. 5) in the RAM memory unit 64 (block 142), clear the zero pound storage register 124 (block 144), and display the "C20 lbs." logo 35 (Fig. 6) in the display 120 (Fig. 4) or 32 (Fig. 2) (block 146) which instructs the operator to put on a twenty pound weight on the scale (block 148). The operator, after putting on the twenty pound weight, will switch (block 150) one of the switches 130 in the banks of switches 66a or 66b (Figs. 2 and 4) which notifies the processor that a twenty pound weight has been placed on the scale.

The processor then reads the output of the A/D converter 56 eight times (block 152) after displaying the "C20 lbs." logo 35 (Fig. 6) and stores the outputs in the A/D register 126 (Fig. 5) (block 154) (Fig. 10B). The processor will take the sum of the readings stored in the register 126 and divide that sum by eight (Fig. 1) (block 156). The resulting quotient representing the average output reading of the A/D converter with respect to a twenty pound weight is stored in (block 158) the twenty pound register 122 (Fig. 5). The processor at this time will monitor the switches in the switch banks 66a and 66b (block 160) to see if any of the switches have been changed. If a switch has not been changed, the processor will return over path 162 and display the "C20 lbs." logo 35 (block 146) on the display 32 (Fig. 1) and repeat the steps as set out in blocks 148 – 158 inclusive until the operator sets one of the switches 130 in the switch bank 66a or 66b.

If a switch in one of the banks 66a or 66b has been changed, the processor will display the "C00 lbs." logo 37 (Fig. 7) in the display 32 (Fig. 2) or 120 (Fig. 4) (block 164). In response to the displaying of the logo, the operator removes the twenty pound weight (block 166) and operates one of the switches in banks 66c or 66d (block 168). The processor reads the output of the A/D converter 56 eight times (block 170) after displaying the "C00 lbs." logo 37. The processor averages the readings of the A/D converter in the manner previously described (block 172) and stores the average in the zero pound storage register 124 (Fig. 5) (block 174). The processor then checks the switches in the switch banks 66c or 66d (block 176) (Fig. 10C) to see if a switch has been changed. If one of those switches has not been changed, the processor returns over path 178 and again displays the "C00 lbs." logo (block 164) and repeats the steps until a switch is detected to have been changed by the operator.

The processor then compares the twenty pound reading currently stored in the register 126 (Fig. 5) with a limit value stored in the register 128 (block 180). The processor then checks (block 182) to see if the twenty pound reading stored in the register 122 (Fig. 5) is within the limit of .01 lbs. (.0045 kg) of the previous reading stored in the register 122. If the new average reading is not within the .01 lb. limit, the processor will repeat the procedure over path 184 until an average reading is established which is within .01 lbs. of the previous average reading. When this occurs the processor will then compare (block 186) the current average reading in the zero pound register 124 with the previous reading and repeat the above described procedure until a current average reading is established which is within .005 lbs. (.0023 kg) of the previous average reading for a zero weight condition (block 186).

With the twenty pound register 122 containing a digital reading which represents the output of the A/D converter 56 (Fig. 2) for a twenty pound (9.07 kgs) weight and the zero pound register 124 containing a reading corresponding to the digital output of the A/D converter 56 (Fig. 2) for a zero pound weight, the processor will then examine the switch settings in the switch banks 66a – 66d inclusive (Figs. 2 and 4). As previously disclosed, the sixteen switches 130 (Fig. 2) in the switch banks 66a and 66b will store a 16 bit binary value in accordance with their settings with each switch setting representing a binary bit. The processor will compare (block 188) each of these switch settings with a corresponding bit in the binary values stored in the registers 122 and 124 (Fig. 5). At this time, the switch settings are in a zero position. This process will be repeated for each of the sixteen switches 130 in the switch banks 66a and 66b corresponding to the binary value stored in the twenty pound storage register 122. In a similar manner, the switch settings of the switches 130 in the switch banks 66c and 66d will be compared to the zero pound digital value stored in the storage register 124. The processor will check (block 190) to see if all of the switch settings are set correctly. If they are not, the processor will then display on the display 32 (Fig. 2) or 120 (Fig. 4) the setting of the lowest switch in the switch banks 66a and 66b which has to be changed to represent the binary value corresponding to the calibrated twenty pound weight (block 192) stored in register 122. Those switches which are required to be set will be displayed one at a time. In response to the displaying of each of the switch settings, the operator (block 194) will set the switches in the manner designated on the display. Thus for example, if the fourth switch in switch bank 66a is to be switched from its present position, the operator will just flip the switch accordingly. A switch which has to be changed will be identified on the display. In a similar manner, the processor will display the switch settings of the switches in the switch banks 66c and 66d representing the digital value corresponding to a calibrated zero weight condition of the scale. In response to the displaying of the switch settings, the operator will set the switches in the same manner as described above. The processor will again, over path 196, check all the switch settings (block 190) to see if they are set correctly. This cycle is repeated until all the switches are set correctly, at which time the processor will then end the calibration procedure (block 198). After the calibration procedure has been completed, the location of the switches 130 is sealed. It will thus be seen that the present invention provides a very simple and foolproof method of calibrating the scale. The method of calibrating the scale as set out in the application requires that the operator have very little training and no knowledge of the actual procedure in the calibrating of the scale.

It has been found in some instances that, when the scale 22 has been calibrated outside the check-out counter 24, the scale 22 has gone out of calibration after it has been mounted within the counter 24, due to the temperature within the interior of the counter 24. There will therefore now be described a method of recalibrating the scale 22 in accordance with the present invention.

Referring now to Fig. 11, there is disclosed a block diagram of another part of the RAM memory unit 64 (Fig. 2) showing the location of various storage registers used in a recalibration procedure. Included is a counter register 216 for outputting a plurality of binary counts and four registers 218 – 224 inclusive for storing the average reading of plurality of readings of the A/D converter 56 (Fig. 2) output. The storage registers 218 and 220 store the current average output readings of the A/D converter while the registers 222 and 224 store previous average readings of the converter.

Referring now to Figs. 13A – 13E inclusive, there is shown a flow chart of a recalibration procedure with the scale mounted within the check-out counter 24 (Fig. 1). Fig. 12 shows the manner in which Figs. 13A – 13E inclusive should be assembled. As previously described, the switches 130 in the switch banks 66a and 66b (Fig. 2) have been set to represent a sixteen binary bit value representing the digital equivalent of the calibrated voltage output of the load cells 50 when a twenty pound (9.07 kgs) weight has been placed on the scale. In a similar manner, the switches 130 in the switch banks 66c and 66d have been set to represent the calibrated voltage output of the cells 50 when the scale is at rest with no weight placed on the scale. The switches 130 have been set as a result of a previous calibration of the scale before the scale was installed in the check-out counter 24 in the manner previously described.

At the start (block 225) (Fig. 13A) of the recalibration procedure, the operator will place a twenty pound weight on the scale (block 226) and then turn on the power to the check-out system (block 228). In response to the turning on of the power, the microprocessor 60 (Fig. 2) will read the digital output of the A/D converter 56 (block 231) and compare that reading with the digital value stored in switches 130 of the switch banks 66a and 66b (block 233) representing the calibrated output reading of the scale for 20 lbs. If the digital output reading of the A/D converter is not (block 234) within plus or minus 1.15 lbs. (0.52 kg) of the digital value set up in the switches 130 of the switch banks 66a and 66b, the processor will end the recalibrated procedure (block 235) requiring that the scale be removed from the check-out counter and recalibrated with the switches 130 in the switch banks 66a – 66d inclusive (Fig. 2) set to their zero position prior to the start of the recalibration procedure in the manner previously described.

If the current reading of the A/D converter 56 is within the plus or minus 1.15 lbs. (0.52 kg) of the value stored in the switch settings, the microprocessor 60 will set the average register 218 to zero (block 236) and the average register 220 to zero (block 238) by loading the registers with zeros. The microprocessor 60 then transfers the data stored in register 218 to the register 222 (block 240) and transfers the data stored in the average register 220 to the register 224 (block 242) (Fig. 13B) which in the present situation is zero. Again, the registers 218 and 220 are loaded with zeros. The microprocessor controls the display 32 (Figs. 1 and 2) to display the "C20 lbs" logo 35 (Fig. 6) (block 244) which tells the operator to ensure that a twenty pound (9.07 kg) weight has been placed on the scale (block 246). At the beginning of the recalibration operation, the twenty pound weight has already been placed on the scale by the operator. The microprocessor then reads the output of the A/D converter 56 (block 247), compares (block 248) the A/D reading with the reading set up in the 20 lbs. switches 130 of the switch banks 66a and 66b (Fig. 2) and checks (block 249) to see if the A/D reading is within ± 1.15 lbs. (0.52 kg) of the switch settings. If it is not, the microprocessor will return over path 250 to display the logo "C20 lbs" logo 35 (block 244) and the reading operation is repeated until the A/D output is within the stated limits. If it is, the microprocessor 60 then sets the counter register 216 (Fig. 11) to zero (block 251), reads the output of the A/D converter (block 252), adds that reading to the average register 220 (block 253) (Fig. 13C) and increments the counter register 216 by one (block 254).

The microprocessor checks the output of the counter register 216 (block 256) to see if the count is eight. If it is not, the microprocessor returns over path 258 and reads the output of the A/D converter (block 252) seven more times until the count in the counter register 216 is equal to the count of eight. When this occurs, the microprocessor divides the data stored in the register 218 representing the sum of eight consecutive readings of the output of the A/D converter 56 by eight (block 260) and stores (block 262) the quotient in the register 220 (Fig. 11).

The microprocessor 60 then displays the "C00 lbs." logo 37 (Fig. 7) on the display 32 (Figs. 1 and 2 (block 264). The operator in response to the display of the logo "C00 lbs" will remove the twenty pound (9.07 kgs) weight from the scale (block 266) after which the microprocessor 60 reads the output of the A/D converter 56 (block 268) and compares (block 270) that reading with the digital reading set up in the switches 130 of the switch banks 66c and 66d (Fig. 2) representing the scale output for a zero weight condition. The microprocessor 60 checks to see if the corresponding weight output of the A/D converter is within the limit of plus or minus 1.15 lbs. (0.52 kg) of the representative weight value set up in the switches in the switch banks 66c and 66d (block 272).

If the reading of the A/D converter 56 is not within the stated limit, the microprocessor returns over path 274 and again displays the "C00 lbs." logo 37 (block 264) and repeats the reading sequence (blocks 266 – 270) until a reading is obtained which is within the limit. If it within the stated limit, the microprocessor then sets the counter register 216 (Fig. 11) to zero (block 276), reads the output of the A/D converter 56 (block 278) (Fig. 13D) and adds that reading to the register 218 (block 280). The microprocessor checks to see if the output of the counter register 216 is equal to eight (block 282). If not the microprocessor will, over path 284, repeat the reading of the A/D converter (block 278) until the output count of register 216 is equal to eight. At that time the microprocessor will divide the data stored in the register 218 by eight (block 286) and store the quotient in register 218 (block 288).

The microprocessor 60 then compares the readings stored in register 218 and register 222 (block 290) representing zero pound readings. If the readings are not within the limit of plus or minus .01 pounds (.0045 kg) of each other, the microprocessor will return over circled "1" symbol 292 and transfers the value stored in register 218 to the register 222 (block 240). The microprocessor then repeats the steps for generating readings corresponding to the placing of a twenty pound (9.07 kgs) weight and zero pound weight on the scale until the corresponding zero pound weight reading stored in register 218 is within plus or minus .01 lbs. (.0045 kg) of the zero pound reading stored in register 222. When this occurs, the microprocessor compares the twenty pound reading stored in register 220 with the twenty pound reading stored in register 224 (block 294) (Fig. 13E).

If the readings in registers 222 and 224 (Fig. 11) are not within the limit of plus or minus .005 lbs. (.0023 kg) of each other, the microprocessor will return over circled "1" symbol 292 and repeat the steps of taking readings when twenty pounds and zero pounds are applied to the scale in the manner described above. When the twenty pound readings in registers 220 and 224 are within plus or minus .005 lbs. of each other, the operator removes the scale from the check-out counter 24 (Fig. 1) (block 298). The microprocessor 60 then compares (block 300) the setting of the switches 130 in the switch banks 66a – 66d inclusive (Fig. 2) with the corresponding readings stored in the registers 218 and 224 (block 300). If the switch settings are correct, (block 302), the microprocessor will end the recalibration procedure. If the switch settings are incorrect, the microprocessor (block 304) displays the lowest switch setting of the remaining switches that has to be changed on the display 32 (Fig. 1). For example, if the seventh switch in bank 66b (Fig. 2) is required to be changed, the "2.7" logo 39 (Fig. 6) would be displayed. In response to the display, the operator sets (block 306) the switches in accordance with the instructions on the display. The microprocessor will return, over path 307 and check to see if all the switch settings are correct (block 302). When all switch settings are found to be correct, the microprocessor will end the recalibration procedure (block 308) and the scale is replaced within the check-out counter 24 (Fig. 1).

It will be seen that the recalibration procedure described herein requires only that the operator follow the instructions displayed on the display. This requirement eliminates any chance of human error entering into the recalibration procedure.

Another requirement of the scale 22 is that it must display a predetermined reference value, normally zero, when no merchandise item is being weighed so that the change in the output display produced by a merchandise item being weighed will accurately represent the true weight of the item. Through use, the zero reference of the scale may change due to the following causes: The accumulation of foreign matter of the scale platform or its supports; a change in the position of the scale platform: the effect of temperature on the electronic components; the offset due to aging of the electrical components; and hysteresis, especially after weighing of a heavy object. Prior methods for zero balancing a scale have included the manual setting of control linkages or the like to zero balance the scale. This procedure is slow and cumbersome, thereby detracting from the usefulness of the scale in checkout operations.

In accordance with another aspect of the invention, there will therefore now be described a method for zero balancing a weighing scale which is simple in its operation and can be accomplished in a minimum amount of time.

Referring now to Fig. 14, there is disclosed a block diagram of another part of the RAM memory unit 64 showing the major items of information storage registers used in a zero balancing operation. Included is a counter register 316 for outputting a plurality of consecutive counts, a current register 318 for storing the current output reading of the A/D converter 56 (Fig. 2), a previous register 320 for storing the previous A/D converter output reading, a register 322 for storing the zero balance readings, a storage register 324 for storing the readings of the zero calibration switches 130 (Fig. 2) in the switch banks 66c and 66d, a register 326 for storing the limits used in zero balancing the scale and two storage registers 328 and 329 for storing miscellaneous totals.

Referring now to Fig. 15, there is shown a schematic representation of the weight limits for a normal weighing operation. The automatic zero balance operation occurs when the scale at rest is within plus or minus .006 lbs (.0027 kg) of the zero reference scale readings. Because the scale in the present embodiment is located within the check-out counter 24 (Fig. 1) and shares the scanner operation, extra precautions, beyond normal scale measures, are taken to ensure an accurate zero balance. For example, spilled liquids, food particles, human intervention, "sticky" scales, temperature, etc. associated with the scale and scanner operation can affect the zero balance status and related scale accuracy. If such a situation occurs, it may be necessary that the scale lid be removed and the scale cleaned of debris. The removal of the scale lid 26 (Fig. 1) will drop the output reading of the load cells 50 (Fig. 2) to a level below –.75 lbs. (.34 kg) as indicated by line 333, resulting in a reset operation of the system. If the display indicates a reading between .006 (.0027 kg) and .05 lbs. (.023 kg) after a fifteen second time out as indicated by line 334, the scale is in a disabled condition requiring a reset operation to occur. If a weight of up to thirty lbs., (13.61 kgs) as indicated by line 336, is left on the scale for more than four minutes, the scale is disabled and a reset operation is required to return the scale to its normal operating range of plus or minus .006 lbs. (.0027 kg).

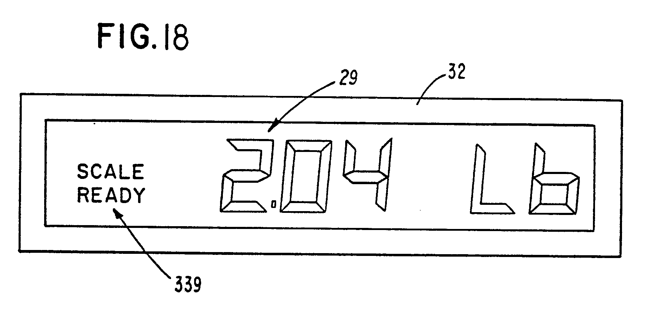

Referring now to Figs. 17A – 17E inclusive, taken together, there is shown a flow chart of the automatic zero balancing operation while Fig. 16 shows the manner in which Figs. 17A – 17E inclusive should be assembled. The operation is started (block 338) (Fig. 17A) at the time power is applied to the system or when a reset operation is to occur. The switches 130 (Fig. 2) in the switch banks 66a and 66b have been set to store a 16 bit binary value representing the scale output value for a weight of 20 lbs (9.07 kg). In a similar manner, the switches 130 in switch banks 66c and 66d store a 16 bit binary value representing the scale output for a weight of 0 lbs. As a first step, the microprocessor 60 (Figs. 2 and 3) turns off a "Scale Ready" logo 339 (Fig. 18) (block 340) in the display 32 and sets the counter register 316 (Fig. 14) (block 342) to zero. The microprocessor then clears the Z register 328 (Fig. 14) (block 344) reads the output of the A/D converter 56 (Fig. 2) (block 346) and stores that reading in the current register 318 (block 348). The microprocessor then checks to see if the current reading is within the limits of –.4 lbs. (.18 kg) to 1 lb. (.45 kg) (block 350) of the zero reading stored in the setting of the switches 130 (Fig. 2) in the zero switch banks 66c and 66d. The limits are obtained from the limit register 326 (Fig. 14). If the A/D converter reading is not within those limits, the microprocessor will return over path 352 and repeat the steps by setting the counter register 316 to zero until the readings are within those limits, indicating that the scale has stabilized with no weight on the scale lid.

When the A/D converter readings fall within those limits, the microprocessor 60 will attempt to establish an average reading of the scale at zero weight by transferring the current A/D reading from the register 318 to the Z register 328 (Fig. 14) (block 354), increment the counter register 316 by one (block 356) and then check the output of the counter register 316 to see if it is equal to eight (block 358) (Fig. 17B). If the output of the counter register is not equal to eight, the processor returns over path 359 and again reads the output of the A/D converter 56 (block 346). This procedure is repeated until the number of readings stored in the Z register 328 equals eight, at which time the microprocessor divides the total of the readings stored in the Z register 328 by eight (block 360) to generate an average reading outputted by the A/D converter 56 (Fig. 2) when no weight is on the scale. The microprocessor then stores the quotient in the zero balance register 322 (Fig. 14) (block 362) and enters the total in the Z register 328 into the W total register 329 (Fig. 14) (block 364). After this has occurred, the microprocessor enables the display 32 to turn on the logo "Scale Ready" 339 (Fig. 18) (block 366) and transfers the readings in the current A/D output register 318 (block 368) to the register 320. This step starts the zero balance operation. The microprocessor then reads the output of the converter (block 370) and stores that output (block 372) in the current register 318.

The microprocessor 60 then checks to determine whether the current reading of the A/D converter stored in the register 318 is within the limits of plus or minus .006 lbs (.0027 kg) of the previous reading of the A/D converter stored in the register 320 (block 374) (Fig. 17C). If the current reading is not within the limits of plus or minus .006 lbs. (Fig. 15), which normally occurs when a weight is removed from the scale and the scale is returning to the zero state, the microprocessor will blank the numerical portion 29 (Fig. 18) of the display 32 (block 376), multiply the current A/D converter reading stored in the register 318 by eight (block 378) and enter that result into the W total register 329 (block 380). The microprocessor 60 will then return over path 382 and repeat the steps of reading the output of the A/D converter (blocks 368 – 372) until two consecutive readings are within plus or minus .006 lbs. of each other. When this occurs, the microprocessor subtracts the last output reading (block 384) of the A/D converter from the total stored in the W register 329, adds the current A/D output reading stored in the register 318 to the W register 329 (block 386) to establish that the average reading reflects the current output readings of the A/D converter 56. The microprocessor then compares (block 388) (Fig. 17D) the current A/D converter output reading stored in register 318 with the reading stored in the zero balance register 322 to establish that the scale reading are within acceptable limits of the a valid zero reading. If the reading in the register 318 is not within plus .004 lbs. (.0018 kg)/minus .0045 lbs. (.002 kg) of the reading in the register 322, the microprocessor will divide the total stored in the W total register 329 by eight (block 390) and transfer the result to the current register 318 (block 392).

The microprocessor attempts to establish the weight condition of the scale by comparing the reading stored in the current register 318 with the reading stored in the zero balance register 322 (block 394). If the current reading of the A/D converter 56 is equal to or less than the reading stored in the zero balance register 322, the microprocessor will follow path 395 and blank the display 32 (block 396) (Fig. 17E) and turn off the logo "Scale Ready" 339 (block 398) notifying the operator to remove the scale lid 26 from the scale 22 (Fig. 1) (block 400). At this time the microprocessor checks to see if the current A/D output reading is below the zero balance reading stored in the register 322 by –.75 lbs. (.34 kg) (Fig. 15) (block 402).

If the reading in the current register 318 is not below the zero balance reading, the microprocessor returns through the circled "2" symbol 403 to block 368 (Fig. 17B) and transfers the current A/D reading to the previous A/D reading register 320 and again samples the output of the A/D converter 56 until the readings are within plus or minus .006 (.0027 kg) lbs. of the previous A/D converter readings (block 374). If the current A/D reading (block 402) is below the zero balance readings stored in the zero balance register 322 by –.75 lbs. (.34 kg) (Fig. 15), the microprocessor will return through the circled "1" symbol 405 to block 340 (Fig. 17A) and initiate a reset operation by repeating the procedure for zero balancing the scale (blocks 340 – 394).

If the current A/D reading is greater than the reading stored in the zero balance register 322 (block 394) (Fig. 17D) the microprocessor will check to see if the logo "Scale Ready" 339 is on (block 404) (Fig. 17E). If it is not on, indicating that a weight cannot be put on the scale, the microprocessor will return through the circled "2" symbol 403 to block 368 (Fig. 17B) and transfer the current A/D reading stored in register 318 to the previous register 320 and repeat the zero balancing procedure until it samples a current reading from the A/D converter 56 which is within plus .004 lbs. (.0018 kg)/minus .0045 lbs. (.002 kg) of the reading in the zero balance register 322 (block 388). If logo "Scale Ready" is on, a weighing operation can take place and the scale 22 will convert the reading stored in its current register 318 to pounds (block 422) and display the pounds 29 (Fig. 18) (block 424).

When the microprocessor 60 obtains a reading from the A/D converter 56 which is within the above cited limits (block 388) (Fig. 17D), the microprocessor will update the zero balance of the scale by subtracting the reading in the zero balance register 322 from the total stored in the Z total register 328 (block 406), add the reading stored in the current register 318 to the Z total register 328 (block 408) and divide the total readings stored in the Z register 328 by eight (block 410). The microprocessor then stores the quotient in the zero balance register 322 (block 412), divides the total readings stored in the W total register 329 by eight (block 414) and stores the quotient representing the average reading outputted by the A/D converter 56 (Fig. 2) in the current register 318 (block 416). The microprocessor then compares (block 418) (Fig. 17E) the average reading stored in the zero balance register 322 with the reading stored in the zero calibration switches 130 in the switch banks 66c and 66d (Fig. 2), which readings are stored in the register 324 (Fig. 14).

If the reading stored in register 322 is not within plus 1 lb. (.45 kg)/–.4 lbs. (.018 kg) of the readings stored in the zero switches (block 418), the microprocessor 60 turns off the logo "Scale Ready" (block 419) and again return through the circled "2" symbol 403 to block 368 and transfers the readings stored in the current register 318 to the previous register 320. The microprocessor then takes readings from the A/D converter until the readings stored in the zero balance register 322 is within (block 418) plus 1 lb./–.4 lbs. of the readings stored in the zero switches 130 in the switch banks 66c and 66d. When that occurs, the microprocessor will turn on the "Scale Ready" logo 339 (block 420), indicating that a scale operation can occur, converts the average reading in the current A/D converter register 318 to pounds (block 422) and displays the pounds in the display 32 (block 424) as part of the scale operation. The microprocessor will then return over line 426 and through the circled "2" symbol 403 to block 368 (Fig. 17B) wherein the microprocessor will again transfer the readings in the current register 318 to the previous register 320 and repeat the zero balancing procedure. During a weighing operation, the microprocessor 56 will continually check to see if the logo "Scale Ready" is on (block 404) (Fig. 17E). If it is, it will convert the reading stored in the current register 318 to pounds (block 422), display the weight in pounds (block 424) and return to block 368 for a zero balancing operation. It will thus be seen that the zero balancing operation is continuous throughout the operation of the scale.

## Claims

1. A method of calibrating an electronic scale (22) arranged to output an n-bit binary signal as a representation of an item being weighed, where n is an integer, characterized by the steps of putting the scale (22) into a first weighted condition, storing a first n-bit binary signal representative of said first weighted condition, comparing the bits of said first binary signal with the settings of a first set of n manually settable switches (66a, 66b), each settable to a first position representative of a first binary digit or a second position representative of the other binary digit, changing, as necessary, the settings of said first set of switches, in accordance with instructions displayed on display means (32), so as to bring the settings of said first set of switches into conformity with said first binary signal, putting the scale (22) into a second weighted condition, storing a second n-bit binary signal representative of said second weighted condition, comparing the bits of said second binary signal with the settings of a second set of manually settable switches (66c, 66d), each settable to a first position representative of said first binary digit or a second position representative of said other binary digit, and changing, as necessary, the settings of said second set of switches, in accordance with instructions displayed on said display means (32), so as to bring the settings of said second set of switches into conformity with said second binary signal.

2. A method according to claim 1, characterized in that each of the switches of said first and second sets (66a – 66d) is set to said first position prior to power being applied to the scale (22).

3. A method according to either claim 1 or claim 2, characterized in that instructions for putting the scale (22) into said first weighted condition and into said second weighted condition are displayed on said display means (32).

4. A method according to any one of the preceding claims, characterized by the step of switching one of said first set of manually operable switches (66a, 66b) for the purpose of indicating that the scale (22) has been put into said first weighted condition, and by the step of switching one of said second set of manually operable switches (66c, 66d) for the purpose of indicating that the scale has been put into said second weighted condition.

5. A method according to any one of the preceding claims, characterized in that in each of the steps of changing the settings of said first set of switches (66a, 66b) and of said second set of switches (66c, 66d), the positions of the switches to be changed are successively displayed on said display means (32).

6. A method according to any one of the preceding claims, characterized in that said first binary signal is a first average of a plurality of n-bit binary signals outputted by the scale (22) when in said first weighted condition, and said second binary signal is a second average of a plurality of n-bit binary signals outputted by the scale when in said second weighted condition.

7. A method according to claim 6, characterized by the steps of storing said first binary signal only when said first average differs by less than a predetermined amount from a previous average of a plurality of n-bit binary signals outputted by the scale (22) when in said first weighted condition, and of storing said second binary signal only when said second average differs by less than a predetermined amount from a previous average of a plurality or n-bit binary signals outputted by the scale when in said second weighted condition.

8. A method according to any one of the preceding claims, characterized in that there is carried out a recalibration of the scale (22) including the steps of mounting the scale in an enclosure (24), putting the scale into a first weighted condition, storing a third n-bit binary signal representative of said first weighted condition, putting the scale into a second weighted condition, storing a fourth n-bit binary signal representative of said second weighted condition, removing the scale (22) from said enclosure (24), comparing the bits of said third binary signal with the settings of said first set of switches (66a, 66b) and the bits of said fourth binary signal with the settings of said second set of switches (66c, 66d), changing, as necessary, the settings of said first and second set of switches, in accordance with instructions displayed on said display means (32), so as to bring the settings of said first set of switches into conformity with said third binary signal and the settings of said second set of switches into conformity with said fourth binary signal, and remounting the scale (22) in said enclosure (24).

9. A method according to claim 8, characterized in that said third binary signal corresponds to the average of a plurality of binary values generated at intervals and representative of said first weighted condition, and said fourth binary signal corresponds to the average of a plurality of binary values generated at intervals and representative of said second weighted condition.

10. A method according to claim 9, characterized by the steps of storing a fifth n-bit binary signal prior to the storage of said third binary signal and storing a sixth n-bit binary signal prior to the storage of said fourth binary signal, said fifth binary signal corresponding to the average of a plurality of binary values generated at intervals and representative of said first weighted condition, and said sixth binary signal corresponding to the average of a plurality of binary values generated at intervals and representative of said second weighted condition, comparing said fifth binary signal with said third binary signal and comparing said sixth binary signal with said fourth binary signal, and proceeding with the step of removing the scale (22) from said enclosure (24) provided that the values of said third and fifth binary signals differ by less than a predetermined amount from each other and the values of said fourth and sixth binary signals differ by less than a predetermined amount from each other.

11. A method according to any one of claims 8 to 10, characterized in that said enclosure is a check-out counter (24).

12. A method according to any one of claims 8 to 11, characterized in that said third binary signal is stored following a check that a binary value representative of said first weighted condition differs by less than a predetermined amount from the value represented by the settings of said first set of switches (66a, 66b), and said fourth binary signal is stored following a check that a binary value representative of said second weighted condition differs by less than a predetermined amount from the value represented by the settings of said second set of switches (66c, 66d).

13. A method according to claim 1, characterized in that said second weighted condition corresponds to zero weight being present on the scale, and in that there is carried out a zero balancing of the scale including the steps of storing a first average of a plurality of n-bit binary signals representative of said second weighted condition in a first register (322), checking that successive n-bit binary signals representative of said second weighted condition differ from each other by less than a predetermined amount, storing a current n-bit binary signal representative of said second weighted condition in a second register (318), checking that the value of the signal in said second register lies within a predetermined range of the value of the signal in said first register, storing a second average in said first register taking into account the value of the signal in said second register, and checking that said second average lies within a predetermined range of the value represented by the settings of said second set of switches (66c, 66d).

14. A method according to claim 13, characterized in that following a zero balancing operation a weighing operation takes place, and that following said weighing operation a further zero balancing operation takes place commencing with the step of checking that successive n-bit binary signals representative of said second weighted condition differ from each other by less than a predetermined amount.

**Patentansprüche**

1. Ein Verfahren zum Eichen einer elektronischen Waage (22), die angeordnet ist, ein n-Bit-Binärsignal als Darstellung eines zu wiegenden Gegenstandes abzugeben, wobei n eine ganze Zahl ist, gekennzeichnet durch die Schritte Versetzen der Waage (22) in einen ersten Wiegezustand, Speichern eines ersten für den ersten Wiegezustand repräsentativen n-bit-Binärsignals, Vergleichen der Bits des ersten Binärsignals mit den Einstellungen eines ersten Satzes von von Hand einstellbaren Schaltern (66a, 66b), von denen jeder in eine für eine erste Binärziffer repräsentative erste Position oder eine für eine andere Binärziffer repräsentative zweite Position einstellbar ist, Verändern, falls notwendig, der Einstellungen des ersten Satzes von Schaltern gemäß auf einer Anzeigevorrichtung (32) angezeigten Instruktionen, um die Einstellungen des ersten Satzes von Schaltern in Einklang mit dem ersten Binärsignal zu bringen, Versetzen der Waage (22) in einen zweiten Wiegezustand, Speichern eines zweiten für den zweiten Wiegezustand repräsentativen n-Bit-Binärsignals, Vergleichen der Bits des zweiten Binärsignals mit den Einstellungen eines zweiten Satzes von von Hand einstellbaren Schaltern (66c, 66d), von denen jeder in eine für eine erste Binärziffer repräsentative erste Position oder eine für eine andere Binärziffer repräsentative zweite Position einstellbar ist, und Ändern, falls erforderlich, der Einstellungen des zweiten Satzes von Schaltern gemäß auf der Anzeigevorrichtung (32) angezeigten Instruktionen, um die Einstellungen des zweiten Satzes von Schaltern in Einklang zu bringen mit dem zweiten Binärsignal.

2. Ein Verfahren nach Anspruch 1, dadurch gekennzeichnet, daß jeder der Schalter des ersten und zweiten Satzes (66a – 66d) vor Anlegen von Spannung an die Waage (22) in die erste Position eingestellt wird.

3. Ein Verfahren entweder nach Anspruch 1 oder 2, dadurch gekennzeichnet, daß Instruktionen zum Versetzen der Waage (22) in den ersten Wiegezustand und in den zweiten Wiegezustand auf der Anzeigevorrichtung (32) angezeigt werden.

4. Ein Verfahren nach einem der vorhergehenden Ansprüche, gekennzeichnet durch die Schritte Schalten eines des ersten Satzes von von Hand betätigbaren Schaltern (66a, 66b) für eine Anzeige, daß die Waage (22) in den ersten Wiegezustand versetzt worden ist, und durch den Schritt Schalten eines des zweiten Satzes von von Hand betätigbaren Schaltern (66c, 66d) für eine Anzeige, daß die Waage in den zweiten Wiegezustand versetzt worden ist.

5. Ein Verfahren nach einem der vorhergehenden Ansprüche, dadurch gekennzeichnet, daß bei jedem der Schritte des Wechselns der Einstellungen des ersten Satzes von Schaltern (66a, 66b) und des zweiten Satzes von Schaltern (66c, 66d) die Positionen der zu ändernden Schalter nacheinander auf der Anzeigevorrichtung (32) angezeigt werden.

6. Ein Verfahren nach einem der vorhergehenden Ansprüche, dadurch gekennzeichnet, daß das erste Binärsignal ein erster Mittelwert einer Vielzahl von durch die Waage (22) abgegebenen n-Bit-Binärsignalen ist, wenn sich diese im ersten Wiegezustand befindet, und das zweite Binärsignal ein zweiter Mittelwert einer Vielzahl von durch die Waage abgegebenen n-Bit-Binärsignalen ist, wenn sich diese im zweiten Wiegezustand befindet.

7. Ein Verfahren nach Anspruch 6, gekennzeichnet durch die Schritte Speichern des ersten Binärsignals nur dann, wenn der erste Mittelwert um weniger als um einen vorbestimmten Wert von einem vorhergehenden Mittelwert einer Vielzahl von durch die Waage (22) abgegebenen n-Bit-Binärsignalen abweicht, wenn sich diese im ersten Wiegezustand befindet, und Speichern des zweiten Binärsignals nur dann, wenn der zweite Mittelwert um weniger als einen vorbestimmten Wert von einem vorhergehenden Mittelwert einer Vielzahl von durch die Waage abgegebenen n-Bit-Binärsignalen abweicht, wenn sich diese im zweiten Wiegezustand befindet.

8. Ein Verfahren nach einem der vorhergehenden Ansprüche, dadurch gekennzeichnet, daß eine Wiedereichung der Waage (22) ausgeführt wird mit den Schritten Unterbringen der Waage in einem Gehäuse (24), Versetzen der Waage in einen ersten Wiegezustand, Speichern eines dritten für den ersten Wiegezustand repräsentativen n-Bit-Binärsignals, Versetzen der Waage in einen zweiten Wiegezustand, Speichern eines vierten für den zweiten Wiegezustand repräsentativen n-Bit-Binärsignals, Entfernen der Waage (22) aus dem Gehäuse (24), Vergleichen der Bits des dritten Binärsignals mit den Einstellungen des ersten Satzes von Schaltern (66a, 66b) und der Bits des vierten Binärsignals mit den Einstellungen des zweiten Satzes von Schaltern (66c, 66d), Verändern, falls erforderlich, der Einstellungen des ersten und zweiten Satzes von Schaltern gemäß auf der Anzeigevorrichtung (32) angezeigter Instruktionen, um die Einstellungen des ersten Satzes von Schaltern in Einklang mit dem dritten Binärsignal und die Einstellungen des zweiten Satzes von Schaltern in Einklang mit dem vierten Binärsignal zu bringen, und Wiedereinsetzen der Waage (22) in das Gehäuse (24).

9. Ein Verfahren nach Anspruch 8, dadurch gekennzeichnet, daß das dritte Binärsignal dem Mittelwert einer Vielzahl von Binärwerten entspricht, die in Intervallen erzeugt werden und für den ersten Wiegezustand repräsentativ sind, und das vierte Binärsignal dem Mittelwert einer Vielzahl von Binärwerten entspricht, die in Intervallen erzeugt werden und repräsentativ für den zweiten Wiegezustand sind.

10. Verfahren nach Anspruch 9, gekennzeichnet durch die Schritte Speichern eines fünften n-Bit-Binärsignals vor dem Speichern des dritten Binärsignals und Speichern eines sechsten n-Bit-Binärsignals vor dem Speichern eines vierten Binärsignals, wobei das fünfte Binärsignal dem Mittelwert einer Vielzahl von Binärwerten entspricht, die in Intervallen erzeugt werden und repräsentativ für den ersten Wiegezustand sind, und das sechste Binärsignal dem Mittelwert einer Vielzahl von Binärwerten entspricht, die in Intervallen erzeugt werden und für den zweiten Wiegezustand repräsentativ sind, Vergleichen des fünften Binärsignals mit dem dritten Binärsignal und Vergleichen des sechsten Binärsignals mit dem vierten Binärsignal und Fortfahren mit dem Schritt des Entfernens der Waage (22) aus dem Gehäuse (24), vorausgesetzt, daß die Werte des dritten und fünften Binärsignals um weniger als einen vorbestimmten Wert voneinander abweichen und die Werte des vierten und sechsten Binärsignals um weniger als einen vorbestimmten Wert voneinander abweichen.

11. Verfahren nach einem der Ansprüche 8 bis 10, dadurch gekennzeichnet, daß das Gehäuse ein Abrechnungskassenstand (24) ist.

12. Verfahren nach einem der Ansprüche 8 bis 11, dadurch gekennzeichnet, daß das dritte Binärsignal nach einer Prüfung dahingehend gespeichert wird, daß ein für den ersten Wiegezustand repräsentativer Binärwert um weniger als einen vorbestimmten Wert von dem durch die Einstellungen des ersten Satzes von Schaltern (66a, 66b) dargestellten Wert abweicht, und daß das vierte Binärsignal nach einer Prüfung dahingehend gespeichert wird, daß ein für den zweiten Wiegezustand repräsentativer Binärwert um weniger als einen vorbestimmten Wert von dem durch die Einstellungen des zweiten Satzes von Schaltern (66c, 66d) dargestellten Wert abweicht.

13. Ein Verfahren nach Anspruch 1, dadurch gekennzeichnet, daß der zweite Wiegezustand dem Nullgewicht entspricht, das an der Waage herrscht, und daß ein Nullabgleich der Waage ausgeführt wird mit den Schritten Speichern eines ersten Mittelwertes einer Vielzahl von für den zweiten Wiegezustand repräsentativen n-Bit-Binärsignalen in einem ersten Register (322), Prüfen, daß aufeinanderfolgende, für den zweiten Wiegezustand repräsentative n-Bit-Binärsignale voneinander um weniger als einen vorbestimmten Wert abweichen, Speichern eines augenblicklichen, den zweiten Wiegezustand darstellenden n-Bit-Binärsignals in einem zweiten Register (318), Prüfen, daß der Wert des Signals in dem zweiten Register innerhalb eines vorbestimmten Wertbereichs des Signals in dem ersten Register liegt, Speichern eines zweiten Mittelwertes in dem ersten Register unter Berücksichtigung des Wertes des Signals in dem zweiten Register und Prüfen, daß der zweite Mittelwert innerhalb eines vorbestimmten Wertebereichs liegt, der durch die Einstellungen des zweiten Satzes von Schaltern (66c, 66d) dargestellt wird.

14. Verfahren nach Anspruch 13, dadurch gekennzeichnet, daß einem Nullabgleichvorgang ein Wiegevorgang folgt und daß dem Wiegevorgang ein weiterer Nullabgleichvorgang folgt, der mit dem Schritt Prüfen beginnt, daß aufeinanderfolgende, für den zweiten Wiegezustand repräsentative n-Bit-Binärsignale voneinander um weniger als einen vorbestimmten Wert abweichen.

## Revendications

1. Procédé d'étalonnage d'une balance électronique (22) conçue pour délivrer un signal binaire de n bits en tant que représentation d'un article en cours de pesée, où n est un entier, caractérisé par les étapes qui consistent à placer la balance (22) dans un premier état de pesée, à mémoriser un premier signal binaire de n bits représentatif dudit premier état de pesée, à comparer les bits dudit premier signal binaire aux réglages d'un premier jeu de n commutateurs (66a, 66b) réglables manuellement, pouvant chacun être réglés dans une première position représentative d'un premier chiffre binaire et une seconde position représentative de l'autre chiffre binaire, à changer, si nécessaire, les réglages dudit premier jeu de commutateurs, en fonction d'instructions affichées sur un moyen d'affichage (32), afin d'amener les réglages dudit premier jeu de commutateurs en conformité avec ledit premier signal binaire, à placer la balance (22) dans un second état de pesée, à mémoriser un second signal binaire de n bits représentatifs dudit second état de pesée, à comparer les bits dudit second signal binaire aux réglages d'un second jeu de commutateurs (66c, 66d) réglables manuellement, pouvant chacun être réglés dans une première position représentative dudit premier chiffre binaire ou dans une seconde position représentative dudit autre chiffre binaire, et à changer, si nécessaire, les réglages dudit second jeu de commutateurs, en fonction d'instructions affichées sur ledit moyen d'affichage (32), afin d'amener les réglages dudit second jeu de commutateurs en conformité avec ledit second signal binaire.

2. Procédé selon la revendication 1, caractérisé en ce que chacun des commutateurs desdits premier et second jeux (66a – 66d) est réglé dans ladite première position avant la mise sous tension de la balance (22).

3. Procédé selon la revendication 1 ou la revendication 2, caractérisé en ce que des instructions pour placer la balance (22) dans ledit premier état de pesée et dans ledit second état de pesée sont affichées sur ledit moyen d'affichage (32).

4. Procédé selon l'une quelconque des revendications précédentes, caractérisé par l'étape qui consiste à connecter l'un des commutateurs (66a, 66b) à commande manuelle dudit premier jeu afin d'indiquer que la balance (22) a été placée dans ledit premier état de pesée, et par l'étape qui consiste à commuter l'un des commutateurs (66c, 66d) à commande manuelle dudit second jeu afin d'indiquer que la balance a été placée dans ledit second état de pesée.

5. Procédé selon l'une quelconque des revendications précédentes, caractérisé en ce que, dans chacune des étapes de changement des réglages des commutateurs (66a, 66b) dudit premier jeu et des commutateurs (66c, 66d) dudit second jeu, les positions des commutateurs à changer sont affichées de façon successive sur ledit moyen d'affichage (32).

6. Procédé selon l'une quelconque des revendications précédentes, caractérisé en ce que ledit premier signal binaire est une première moyenne de plusieurs signaux binaires de n bits délivrés par la balance (22) lorsqu'elle est dans ledit premier état de pesée, et ledit second signal binaire est une seconde moyenne de plusieurs signaux binaires de n bits délivrés par la balance lorsqu'elle est dans ledit second état de pesée.

7. Procédé selon la revendication 6, caractérisé en ce que les étapes consistent à mémoriser ledit premier signal binaire uniquement lorsque ladite première moyenne diffère de moins d'une quantité prédéterminée d'une moyenne précédente de plusieurs signaux binaires de n bits délivrés par la balance (22) lorsqu'elle est dans ledit premier état de pesée, et à mémoriser ledit second signal binaire uniquement lorsque ladite seconde moyenne diffère de moins d'une quantité prédéterminée d'une moyenne précédente de plusieurs signaux binaires de n bits délivrés par la balance lorsqu'elle est dans ledit second état de pesée.

8. Procédé selon l'une quelconque des revendications précédentes, caractérisé en ce qu'il est procédé à un ré-étalonnage de la balance (22), comprenant les étapes qui consistent à monter la balance dans une enceinte (24), à placer la balance dans un premier état de pesée, à mémoriser un troisième signal binaire de n bits représentatif dudit premier état de pesée, à placer la balance dans un second état de pesée, à mémoriser un quatrième signal binaire de n bits représentatif dudit second état de pesée, à retirer la balance (22) de ladite enceinte (24), à comparer les bits dudit troisième signal binaire aux réglages dudit premier jeu de commutateurs (66a, 66b) et les bits dudit quatrième signal binaire aux réglages dudit second jeu de commutateurs (66c, 66d), à changer, si nécessaire, les réglages desdits premier et second jeux de commutateurs, en fonction d'instructions affichées sur ledit moyen d'affichage (32), afin d'amener les réglages dudit premier jeu de commutateurs en conformité avec ledit troisième signal binaire et les réglages dudit second jeu de commutateurs en conformité avec ledit quatrième signal binaire, et à remonter la balance (22) dans ladite enceinte (24).

9. Procédé selon la revendication 8, caractérisé en ce que ledit troisième signal binaire correspond à la moyenne de plusieurs valeurs binaires générées à intervalles et représentatives dudit premier état de pesée, et ledit quatrième signal binaire correspond à la moyenne de plusieurs valeurs binaires générées à intervalles et représentatives dudit second état de pesée.

10. Procédé selon la revendication 9, caractérisé par les étapes qui consistent à mémoriser un cinquième signal binaire de n bits avant la mémorisation dudit troisième signal binaire et à mémoriser un sixième signal binaire de n bits avant la mémorisation dudit quatrième signal binaire, ledit cinquième signal binaire correspondant à la moyenne de plusieurs valeurs binaires générées à intervalles et représentatives dudit premier état de pesée, et ledit sixième signal binaire correspondant à la moyenne de plusieurs valeurs binaires générées à intervalles et représentatives dudit second état de pesée, à comparer ledit cinquième signal binaire audit troisième signal binaire et à comparer ledit sixième signal binaire audit quatrième signal binaire, et à procéder à l'étape consistant à retirer la balance (22) de ladite enceinte (24) pourvu que les valeurs desdits troisième et cinquième signaux binaires diffèrent l'une de l'autre de moins d'une quantité prédéterminée et que les valeurs desdits quatrième et sixième signaux binaires diffèrent l'une de l'autre de moins d'une quantité prédéterminée.

11. Procédé selon l'une quelconque des revendications 8 à 10, caractérisé en ce que ladite enceinte est une caisse de sortie (24).

12. Procédé selon l'une quelconque des revendications 8 à 11, caractérisé en ce que ledit troisième signal binaire est mémorisé après une vérification qu'une valeur binaire représentative dudit premier état de pesée diffère de moins d'une quantité prédéterminée de la valeur représentée par les réglages dudit premier jeu de commutateurs (66a, 66b), et ledit quatrième signal binaire est mémorisé après une vérification qu'une valeur binaire représentative dudit second état de pesée diffère de moins d'une quantité prédéterminée de la valeur représentée par les réglages dudit second jeu de commutateurs (66c, 66d).

13. Procédé selon la revendication 1, caractérisé en ce que ledit second état de pesée correspond à un poids zéro présent sur la balance, et en ce qu'il est effectué une mise à zéro de la balance comprenant les étapes qui consistent à mémoriser une première moyenne de plusieurs signaux binaires de n bits représentatifs dudit second état de pesée dans un premier registre (322), à vérifier que des signaux binaires successifs de n bits représentatifs dudit second état de pesée diffèrent les uns des autres de moins d'une quantité prédéterminée, à mémoriser un signal binaire à jour de n bits représentatif dudit second état de pesée dans un second registre (318), à vérifier que la valeur du signal dans ledit second registre est comprise dans un intervalle prédéterminé de la valeur du signal dans ledit premier registre, à mémoriser une seconde moyenne dans ledit premier registre en tenant compte de la valeur du signal dans ledit second registre, et à vérifier que ladite seconde moyenne est comprise dans un intervalle prédéterminé de la valeur représentée par les réglages dudit second jeu de commutateurs (66c, 66d).

14. Procédé selon la revendication 13 , caractérisé en ce que, après une opération de mise à zéro, une opération de pesée a lieu et en ce qu'après ladite opération de pesée, une autre opération de mise à zéro a lieu, commençant avec l'étape consistant à vérifier que des signaux binaires successifs de n bits, représentatifs dudit second état de pesée, diffèrent les uns des autres de moins d'une quantité prédéterminée.

FIG. 1

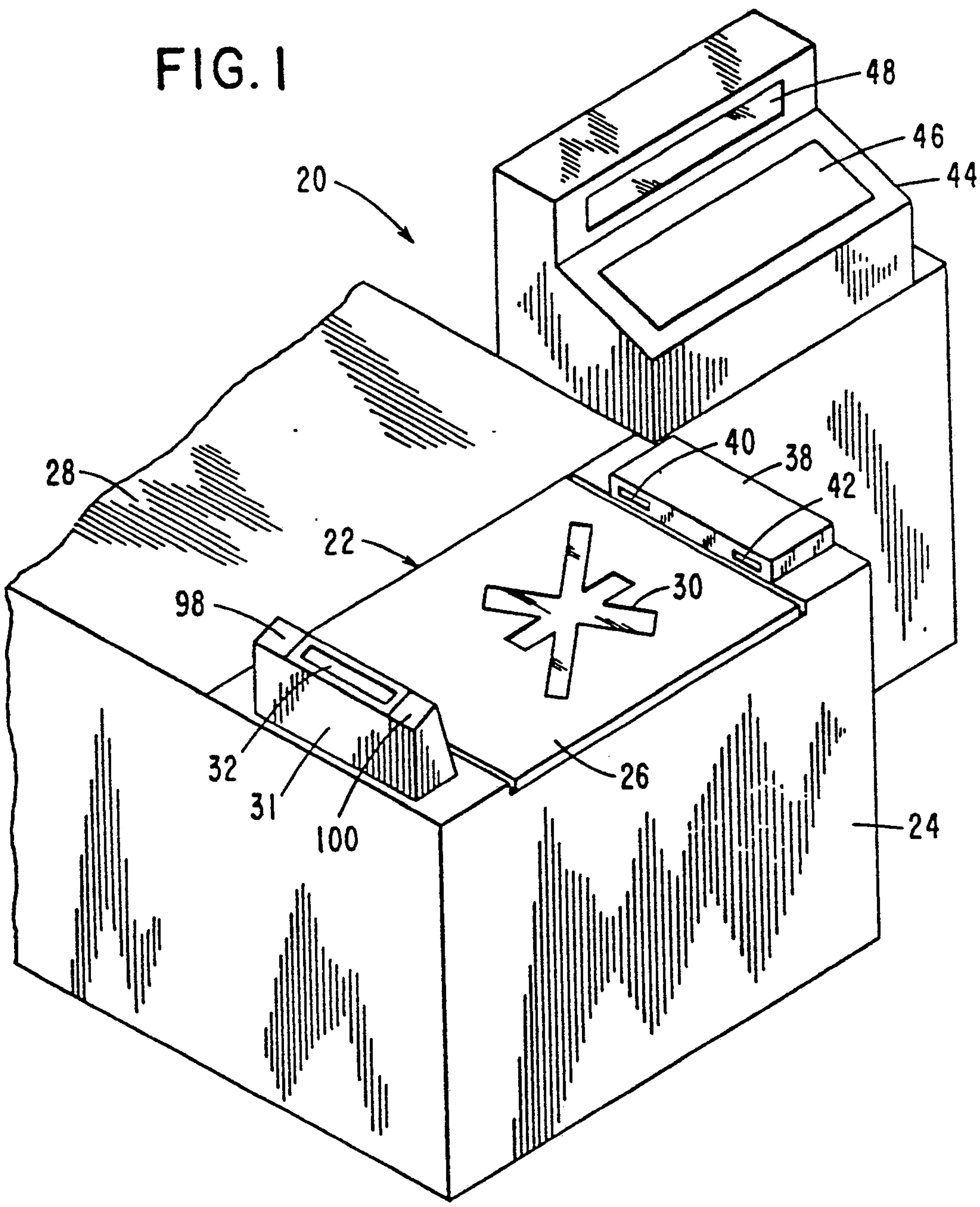

FIG. 2

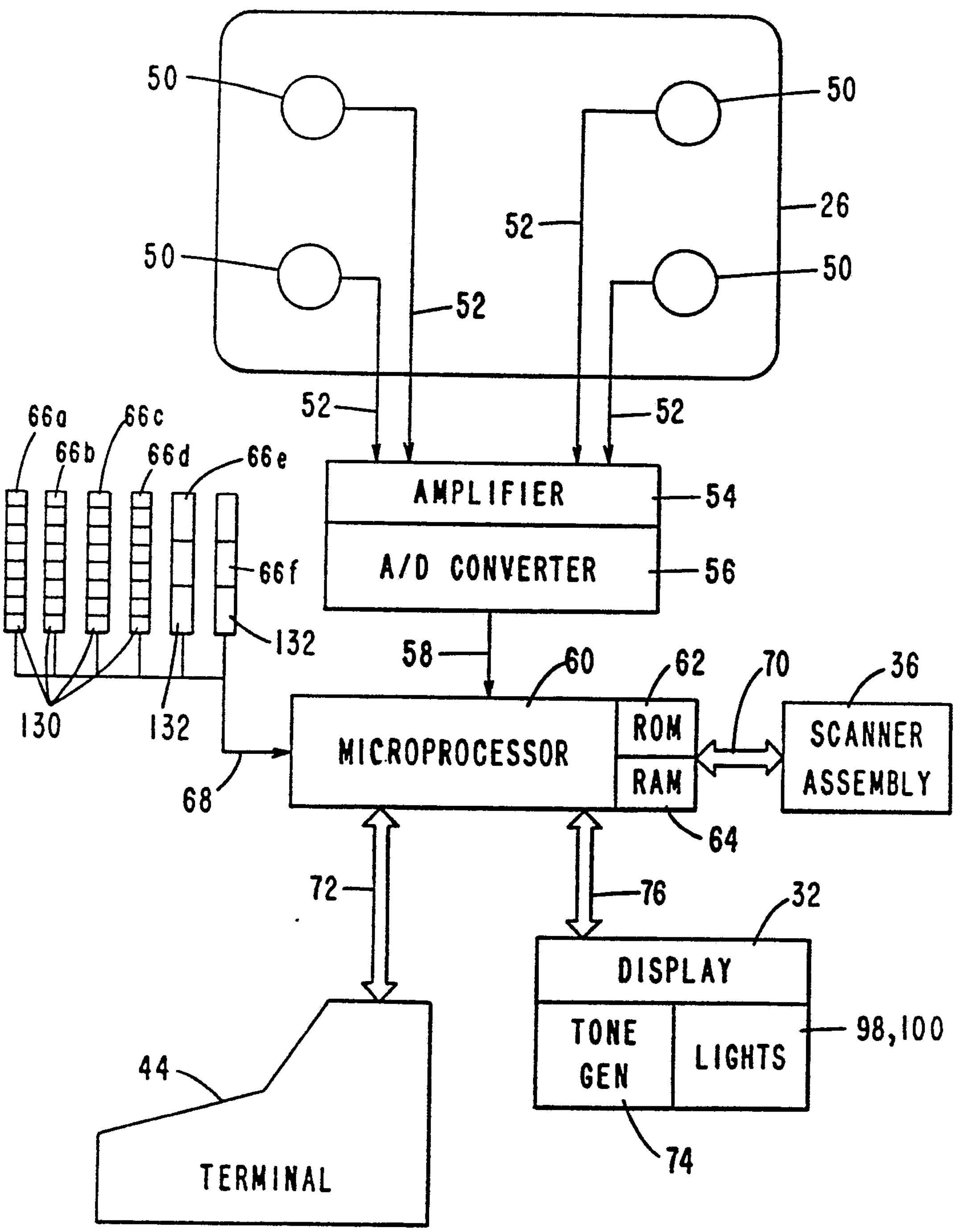
50
50
50
50
52
52
52
52
26
66a
66b
66c
66d
66e
66f
132
130
132
68
AMPLIFIER
54
A/D CONVERTER
56
58
60
62
70
36
MICROPROCESSOR
ROM
RAM
64
SCANNER ASSEMBLY
72
76
32
DISPLAY
TONE GEN
LIGHTS
98,100
74
44
TERMINAL

FIG. 3

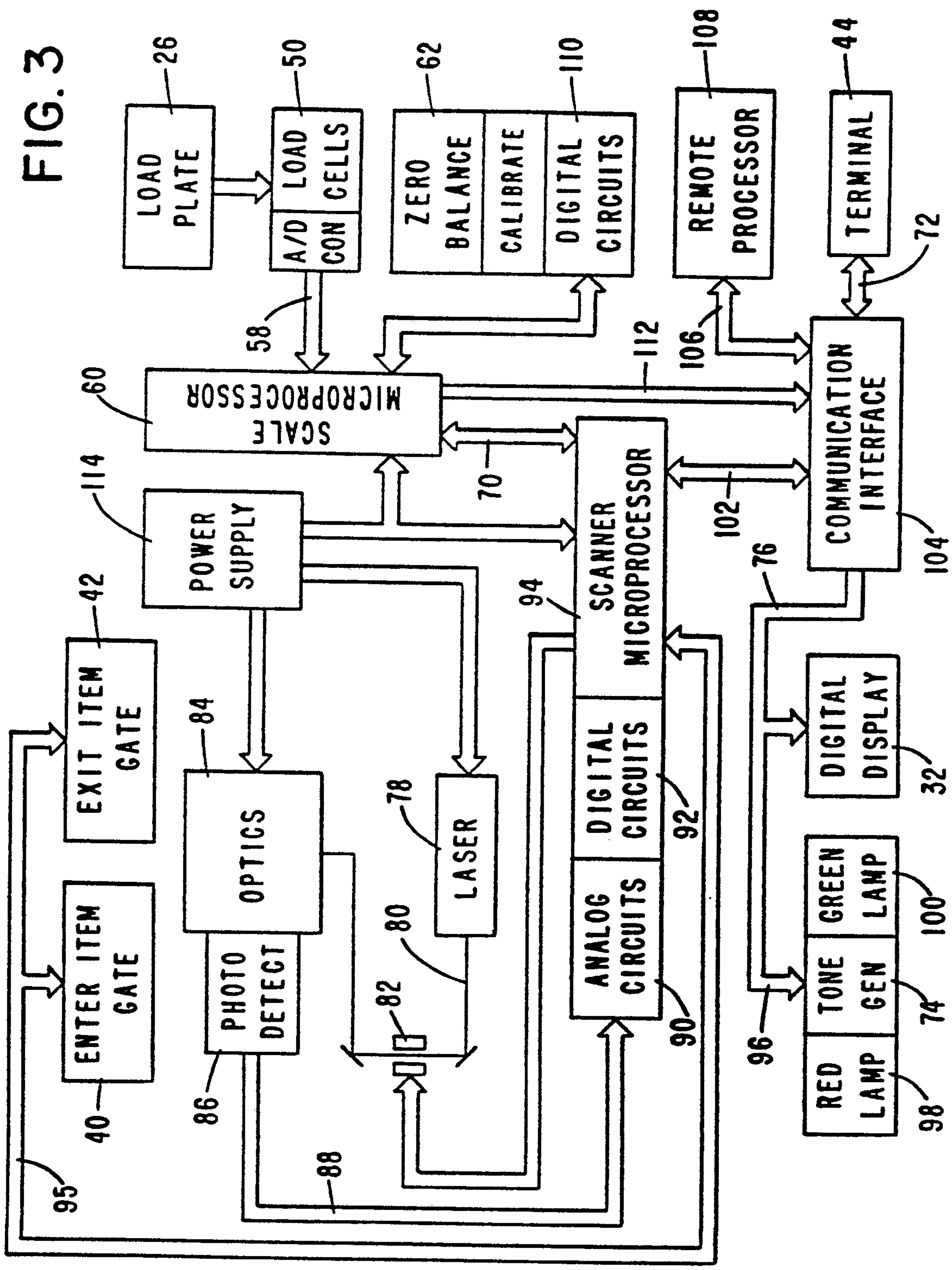
LOAD PLATE
A/D CON
LOAD CELLS
ZERO BALANCE
CALIBRATE
DIGITAL CIRCUITS
REMOTE PROCESSOR
TERMINAL
SCALE MICROPROCESSOR
COMMUNICATION INTERFACE
POWER SUPPLY
SCANNER MICROPROCESSOR
EXIT ITEM GATE
ENTER ITEM GATE
OPTICS
PHOTO DETECT
LASER
DIGITAL CIRCUITS
ANALOG CIRCUITS
DIGITAL DISPLAY
RED LAMP
TONE GEN
GREEN LAMP
26
50
62
110
108
44
72
58
60
112
106
114
70
102
104
76
42
94
84
78
80
82
92
32
100
90
74
96
98
40
86
88
95

FIG. 4

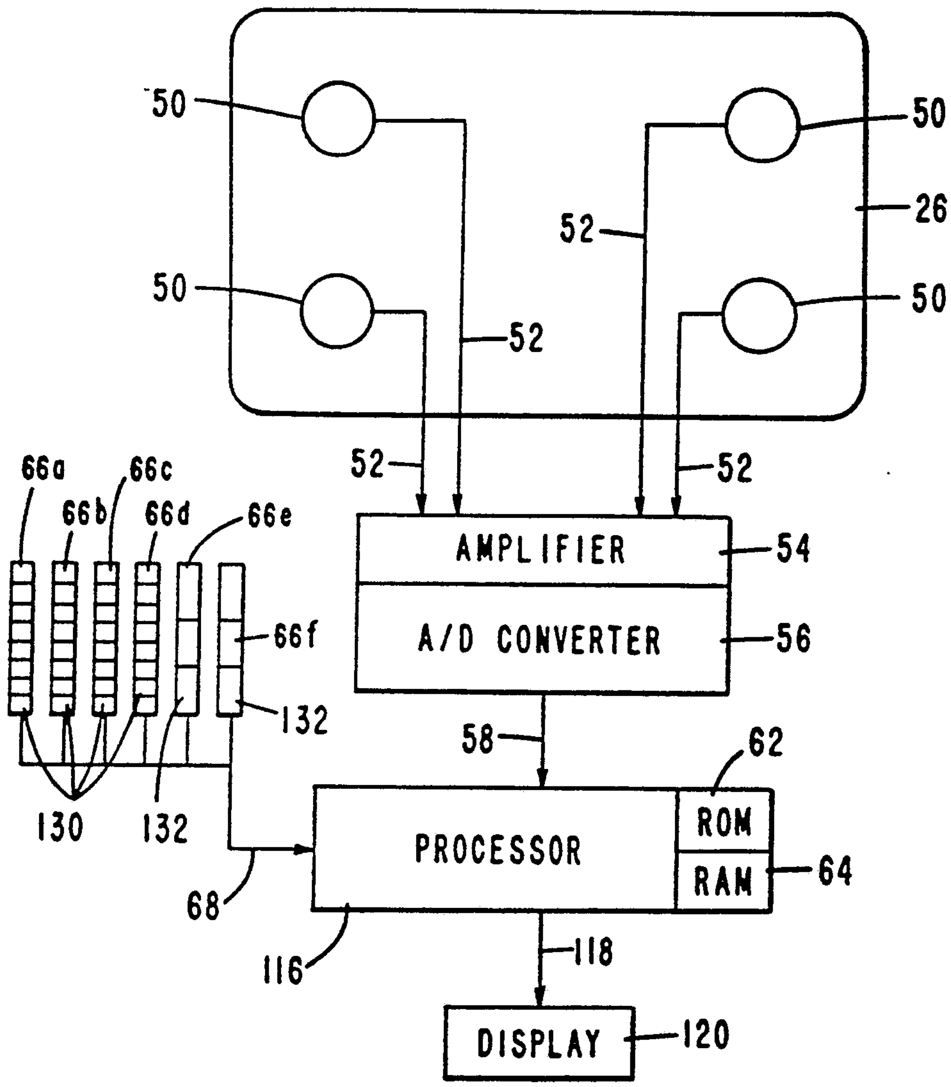
50
50
52
26
50
50
52
52
52
66a
66c
66b
66d
66e
AMPLIFIER
54
A/D CONVERTER
56
66f
132
58
62
130
132
ROM
PROCESSOR
RAM
64
68
116
118
DISPLAY
120

FIG.5

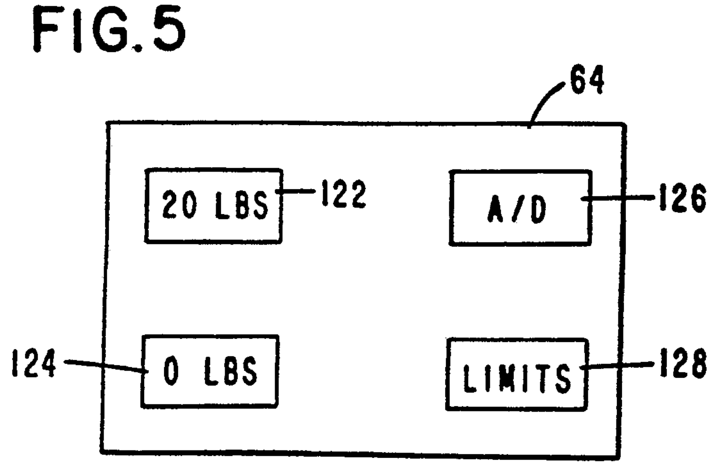
64
20 LBS
122
A/D
126
124
0 LBS
LIMITS
128

FIG. 6

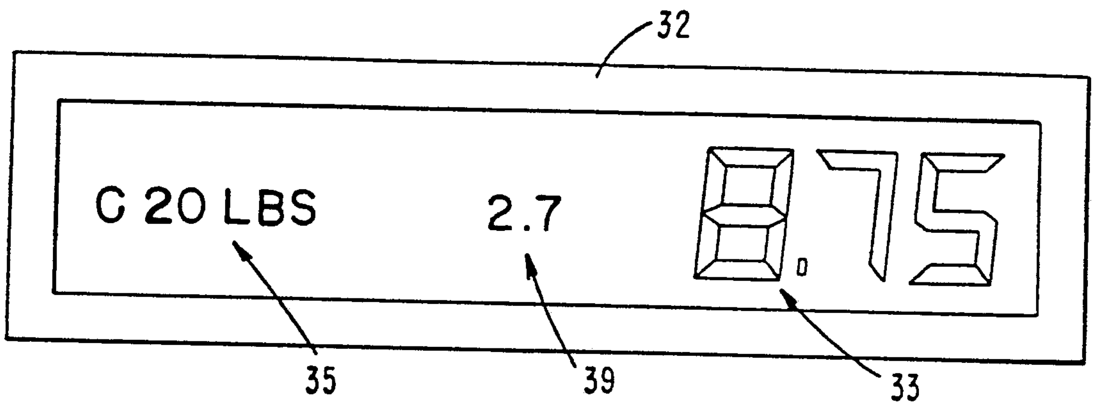


FIG. 7

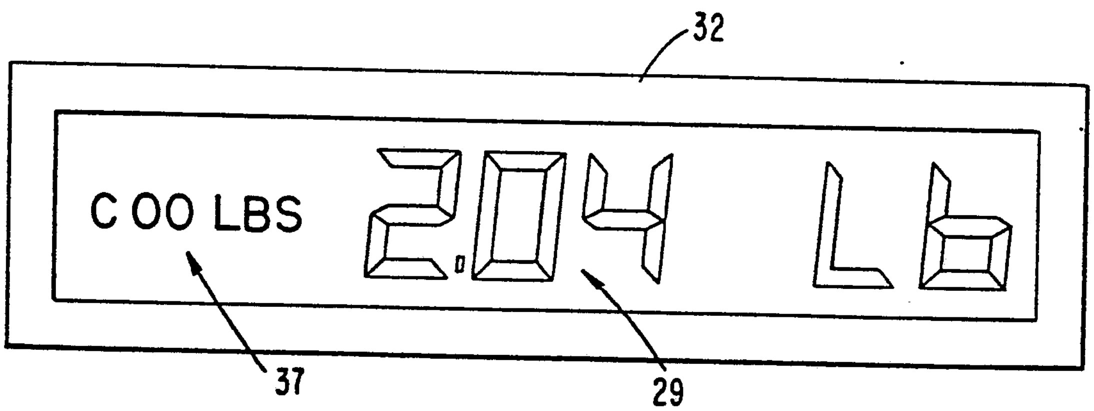

FIG. 8

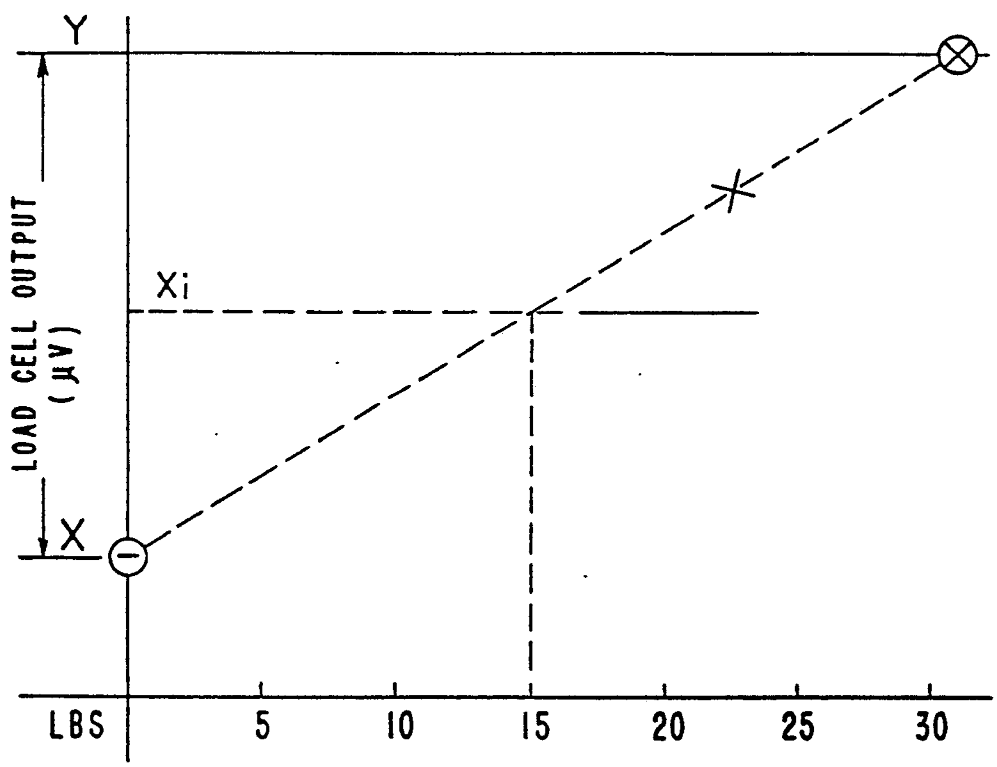

FIG.10A

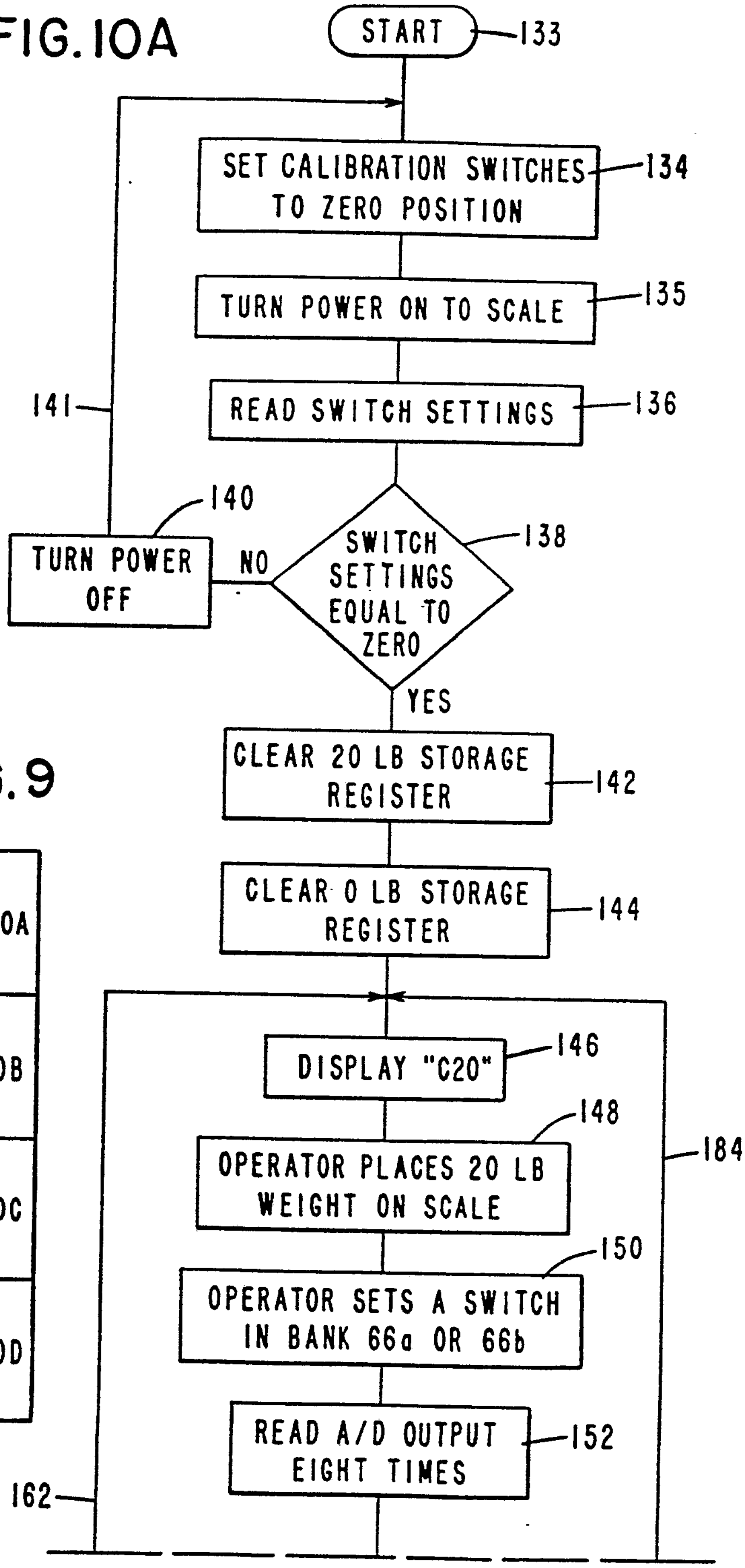
START
133
SET CALIBRATION SWITCHES TO ZERO POSITION
134
TURN POWER ON TO SCALE
135
READ SWITCH SETTINGS
136
141
140
TURN POWER OFF
NO
SWITCH SETTINGS EQUAL TO ZERO
138
YES
CLEAR 20 LB STORAGE REGISTER
142
CLEAR 0 LB STORAGE REGISTER
144
DISPLAY "C20"
146
148
OPERATOR PLACES 20 LB WEIGHT ON SCALE
184
150
OPERATOR SETS A SWITCH IN BANK 66a OR 66b
READ A/D OUTPUT EIGHT TIMES
152
162

FIG.9

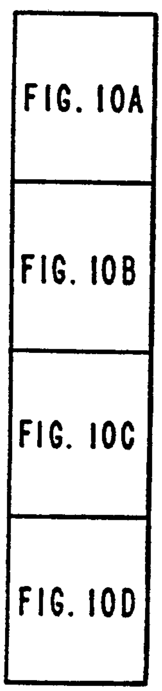
FIG. 10A
FIG. 10B
FIG. 10C
FIG. 10D

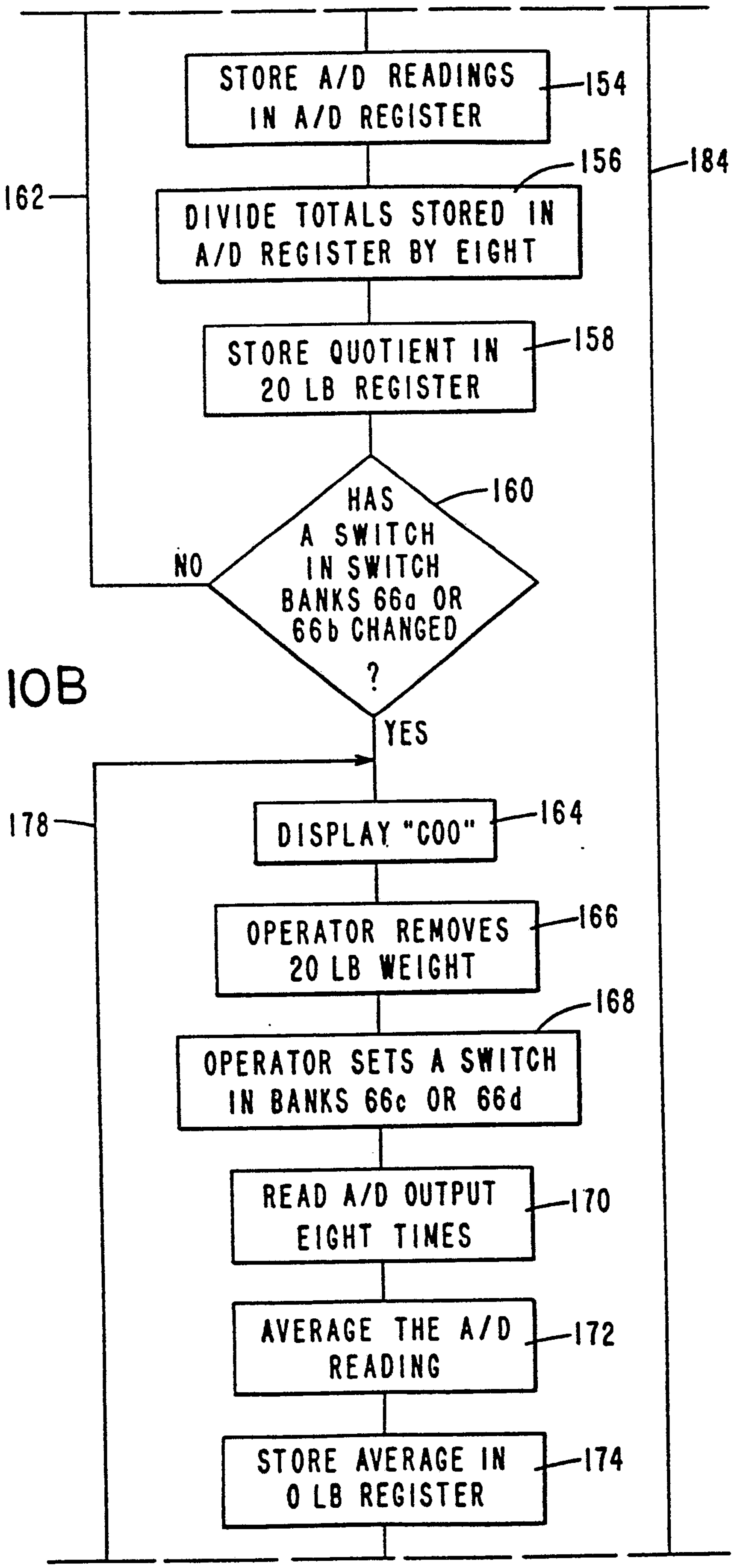
STORE A/D READINGS IN A/D REGISTER
154
DIVIDE TOTALS STORED IN A/D REGISTER BY EIGHT
156
184
162
STORE QUOTIENT IN 20 LB REGISTER
158
HAS A SWITCH IN SWITCH BANKS 66a OR 66b CHANGED ?
160
NO
YES
DISPLAY "C00"
164
178
OPERATOR REMOVES 20 LB WEIGHT
166
OPERATOR SETS A SWITCH IN BANKS 66c OR 66d
168
READ A/D OUTPUT EIGHT TIMES
170
AVERAGE THE A/D READING
172
STORE AVERAGE IN 0 LB REGISTER
174

FIG.10B

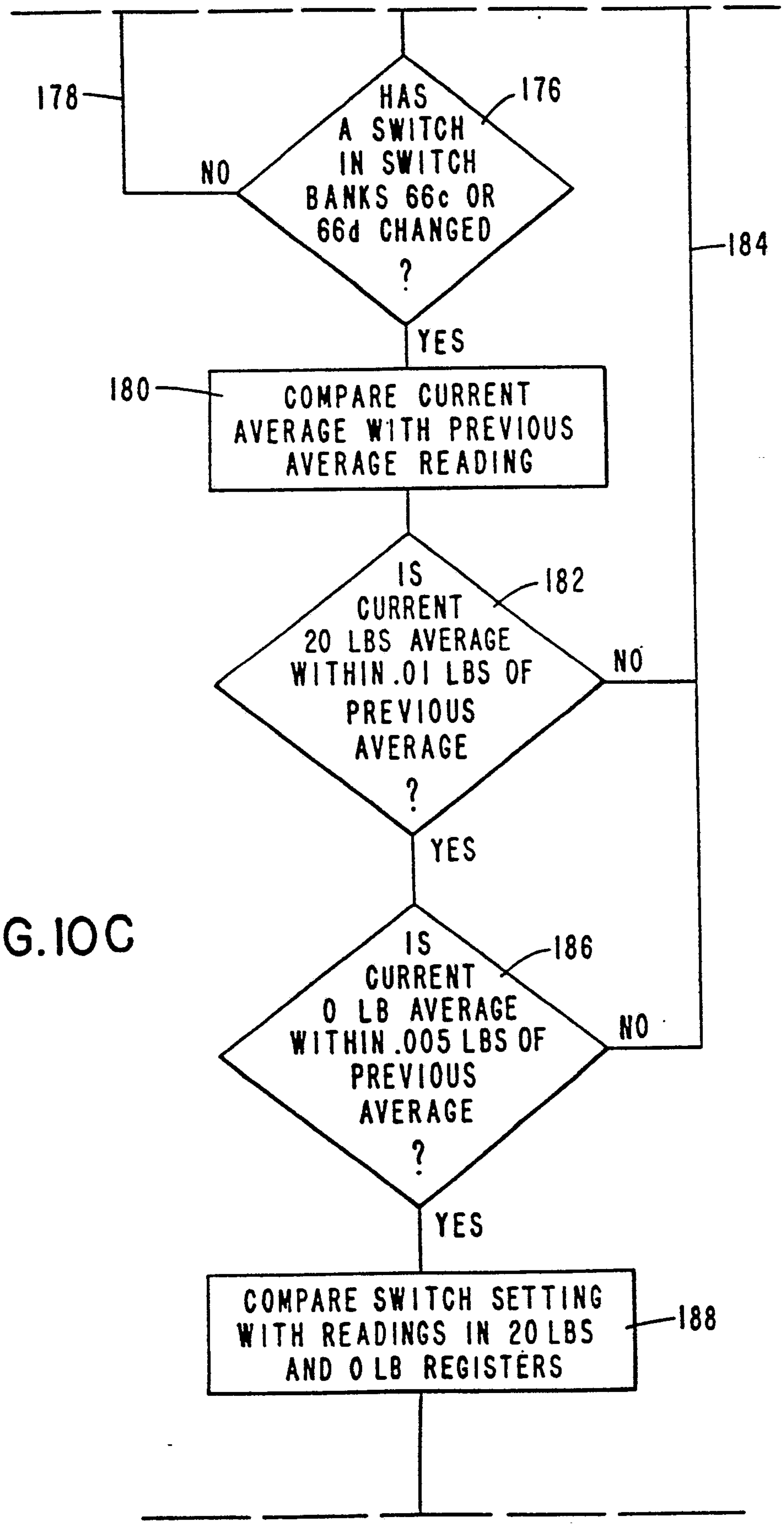
HAS A SWITCH IN SWITCH BANKS 66c OR 66d CHANGED ?
176
178
NO
YES
184
180
COMPARE CURRENT AVERAGE WITH PREVIOUS AVERAGE READING
IS CURRENT 20 LBS AVERAGE WITHIN .01 LBS OF PREVIOUS AVERAGE ?
182
NO
YES
IS CURRENT 0 LB AVERAGE WITHIN .005 LBS OF PREVIOUS AVERAGE ?
186
NO
YES
COMPARE SWITCH SETTING WITH READINGS IN 20 LBS AND 0 LB REGISTERS
188

FIG.10C

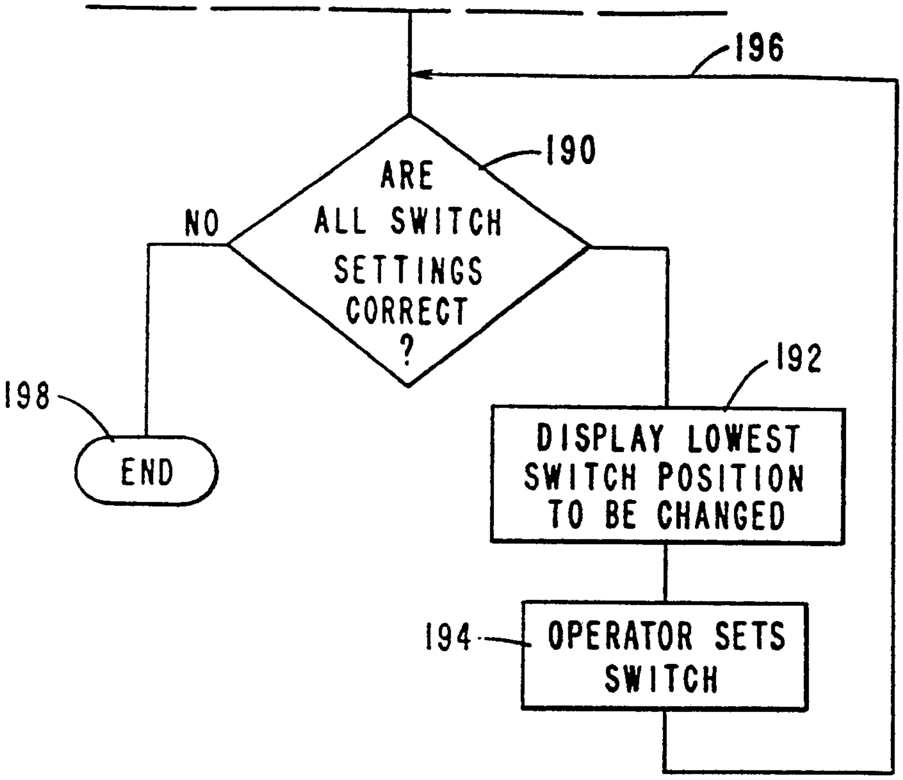


FIG. 10D

FIG. 11.

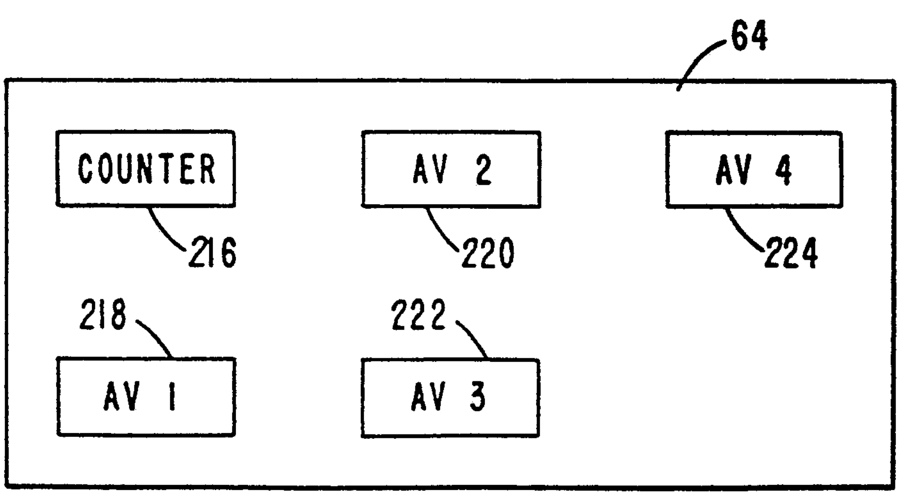

FIG. 13A

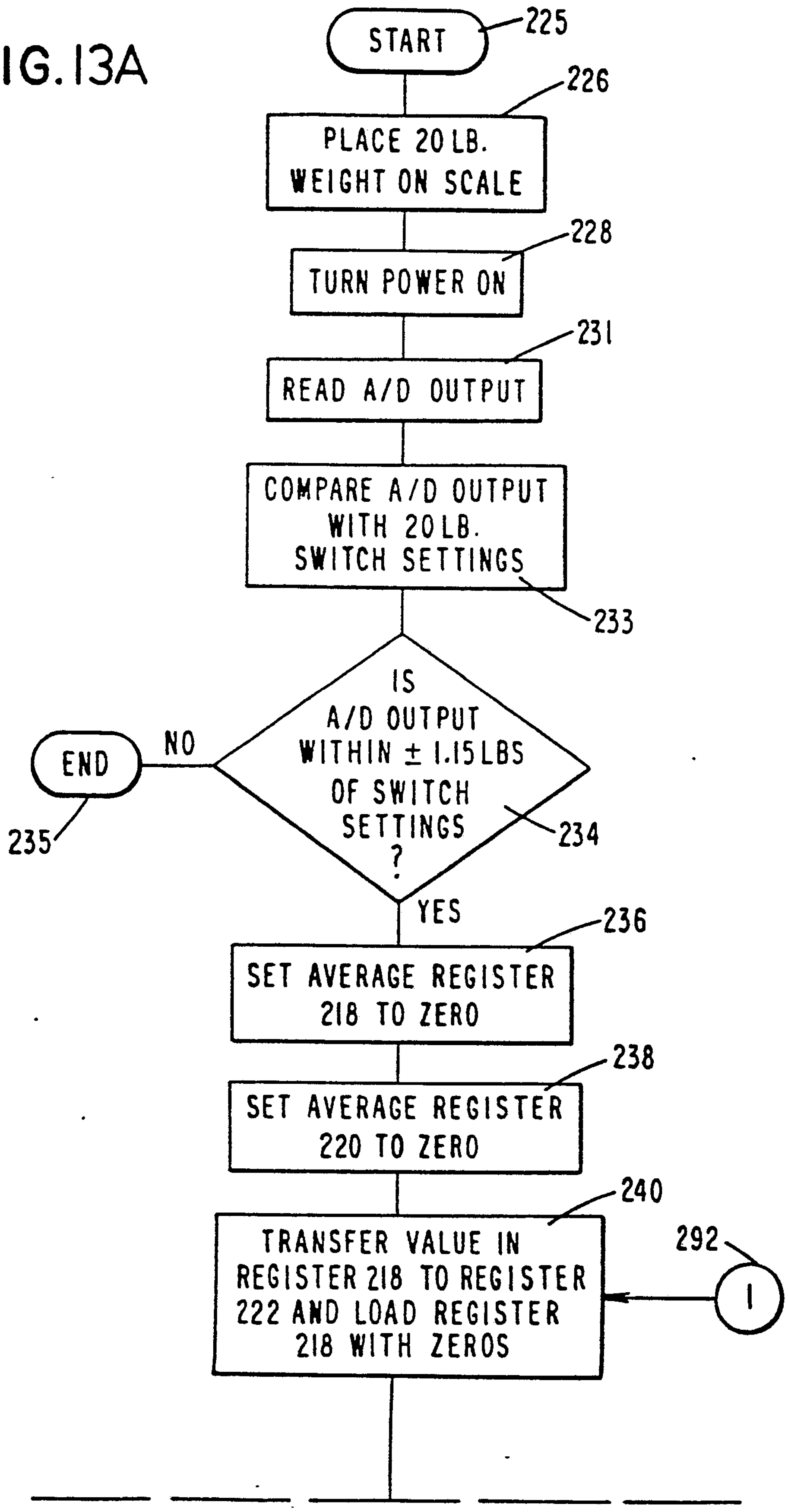
START
225
226
PLACE 20 LB. WEIGHT ON SCALE
228
TURN POWER ON
231
READ A/D OUTPUT
COMPARE A/D OUTPUT WITH 20 LB. SWITCH SETTINGS
233
IS A/D OUTPUT WITHIN ± 1.15 LBS OF SWITCH SETTINGS ?
234
NO
END
235
YES
236
SET AVERAGE REGISTER 218 TO ZERO
238
SET AVERAGE REGISTER 220 TO ZERO
240
TRANSFER VALUE IN REGISTER 218 TO REGISTER 222 AND LOAD REGISTER 218 WITH ZEROS
292
1

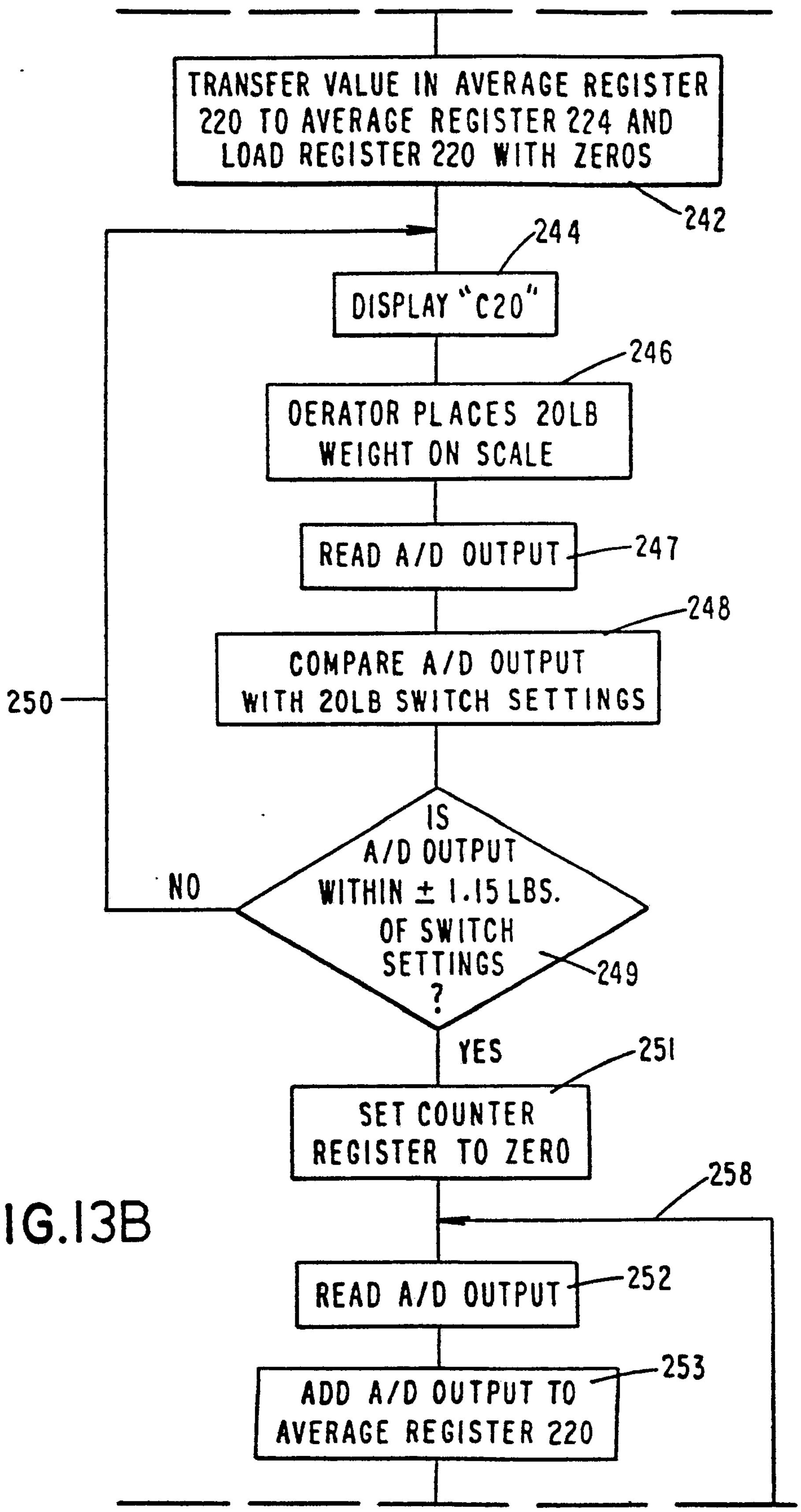
TRANSFER VALUE IN AVERAGE REGISTER 220 TO AVERAGE REGISTER 224 AND LOAD REGISTER 220 WITH ZEROS
242
244
DISPLAY "C20"
246
OERATOR PLACES 20LB WEIGHT ON SCALE
READ A/D OUTPUT
247
248
COMPARE A/D OUTPUT WITH 20LB SWITCH SETTINGS
250
NO
IS A/D OUTPUT WITHIN ± 1.15 LBS. OF SWITCH SETTINGS ?
249
YES
251
SET COUNTER REGISTER TO ZERO
258
READ A/D OUTPUT
252
253
ADD A/D OUTPUT TO AVERAGE REGISTER 220

FIG.13B

FIG.13C

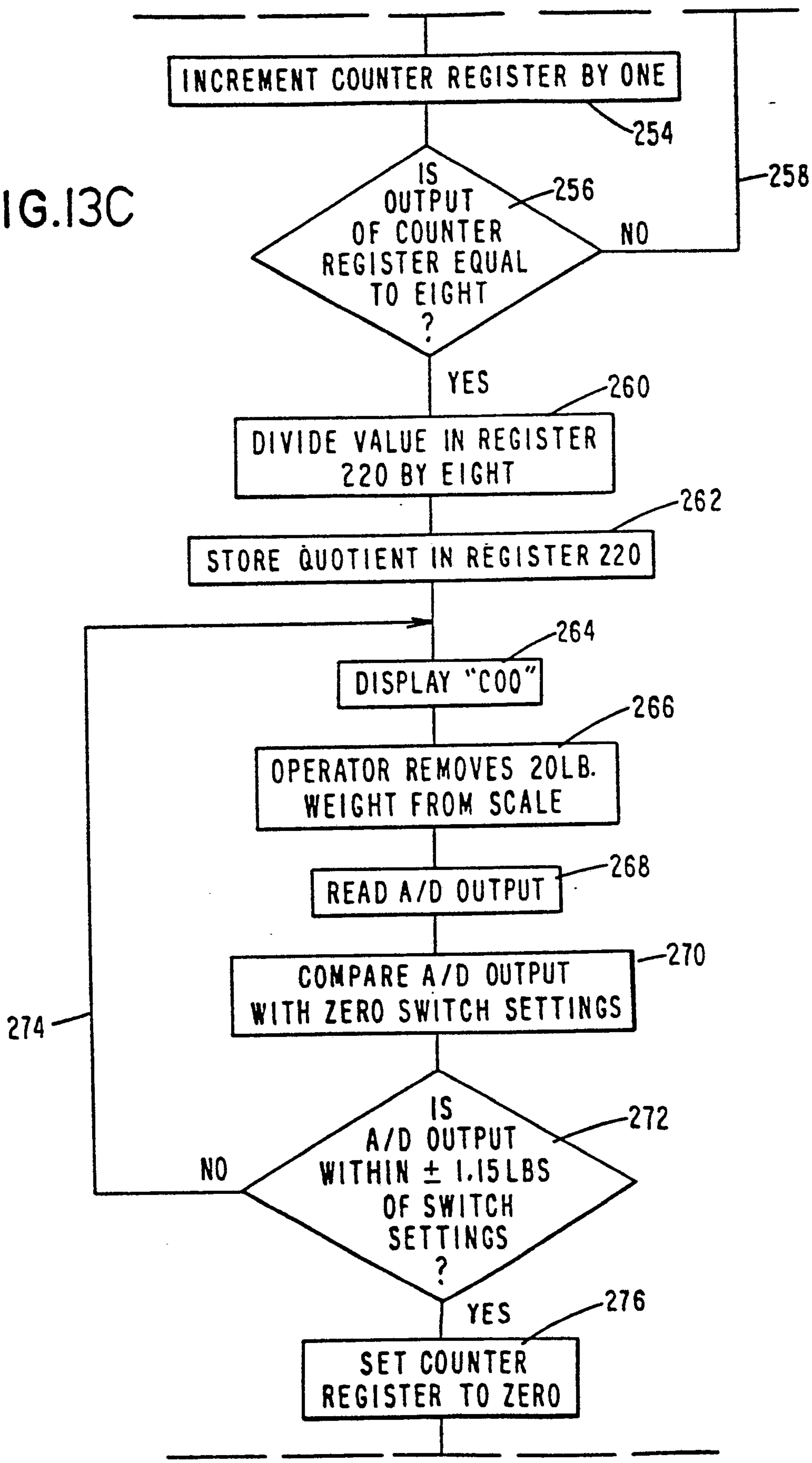
INCREMENT COUNTER REGISTER BY ONE
254
IS OUTPUT OF COUNTER REGISTER EQUAL TO EIGHT ?
256
NO
258
YES
260
DIVIDE VALUE IN REGISTER 220 BY EIGHT
262
STORE QUOTIENT IN REGISTER 220
264
DISPLAY "C00"
266
OPERATOR REMOVES 20LB. WEIGHT FROM SCALE
268
READ A/D OUTPUT
270
COMPARE A/D OUTPUT WITH ZERO SWITCH SETTINGS
274
IS A/D OUTPUT WITHIN ± 1.15LBS OF SWITCH SETTINGS ?
272
NO
YES
276
SET COUNTER REGISTER TO ZERO

FIG.13D

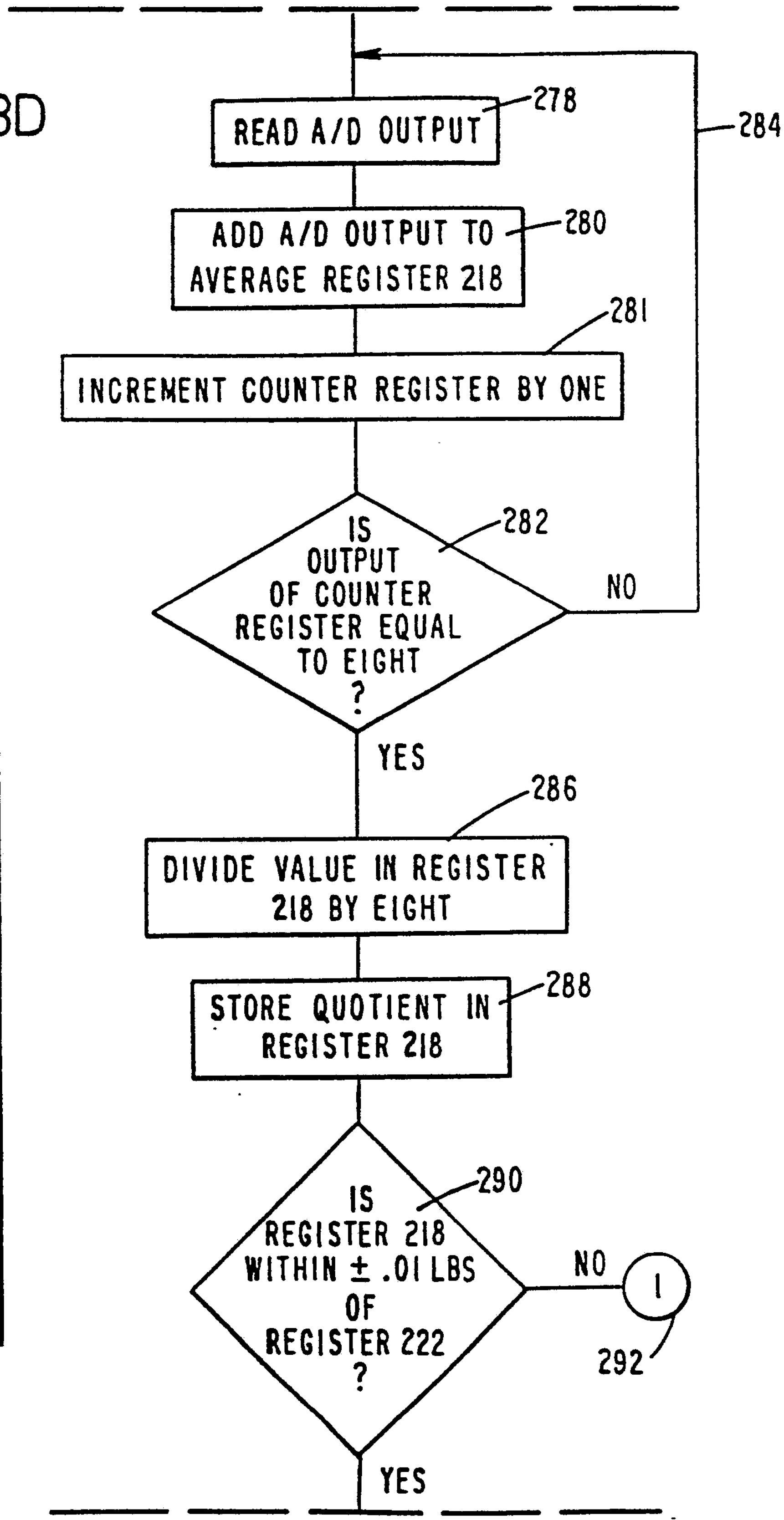


FIG.12

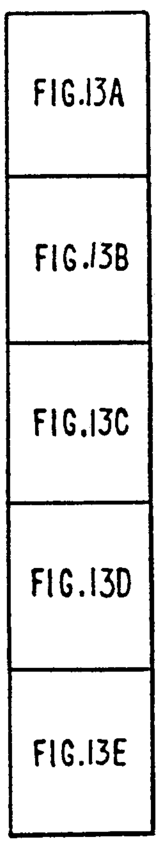

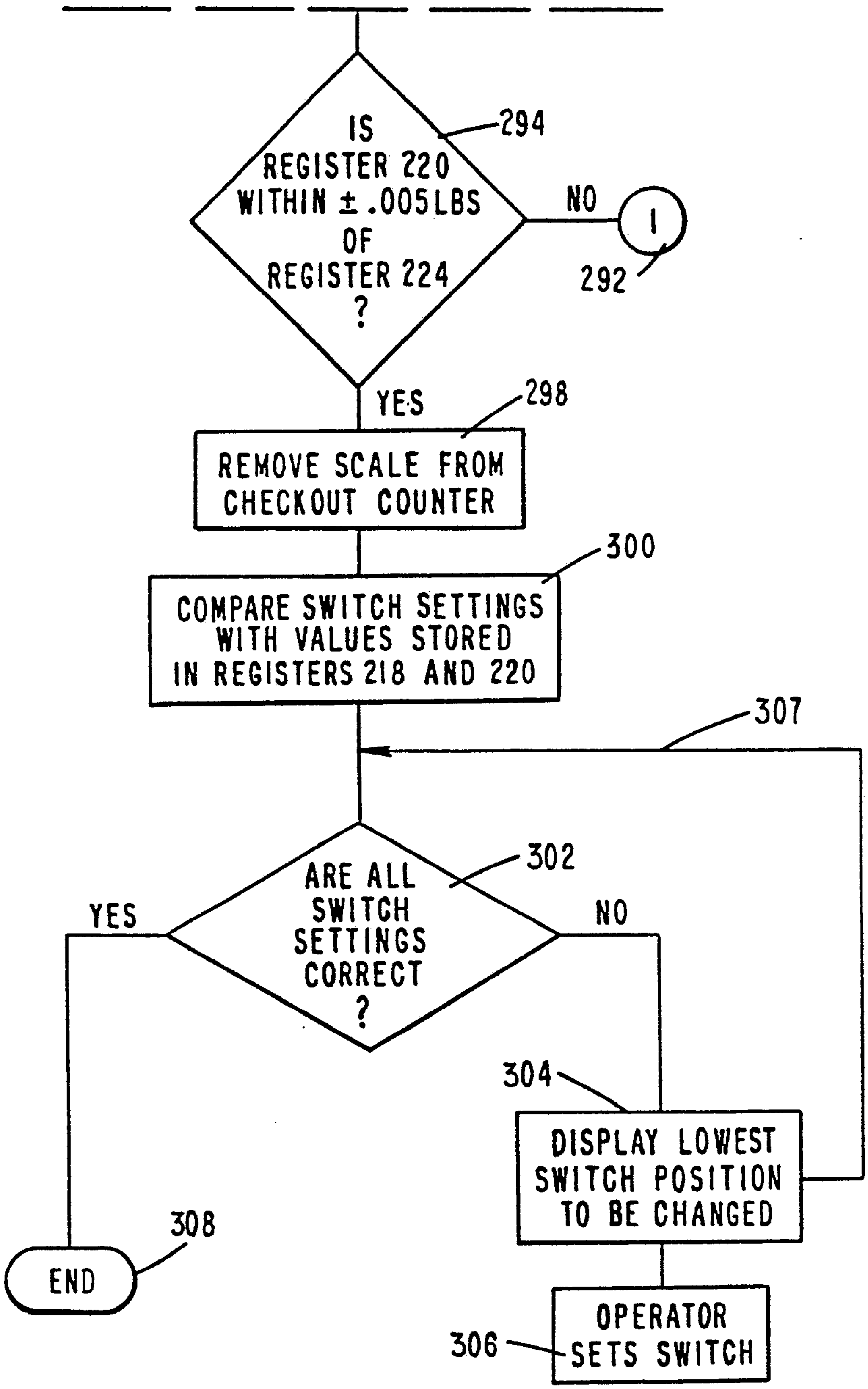
IS REGISTER 220 WITHIN ± .005 LBS OF REGISTER 224 ?
294
NO
1
292
YES
298
REMOVE SCALE FROM CHECKOUT COUNTER
300
COMPARE SWITCH SETTINGS WITH VALUES STORED IN REGISTERS 218 AND 220
307
ARE ALL SWITCH SETTINGS CORRECT ?
302
YES
NO
304
DISPLAY LOWEST SWITCH POSITION TO BE CHANGED
308
END
306
OPERATOR SETS SWITCH

FIG.13E

FIG.14

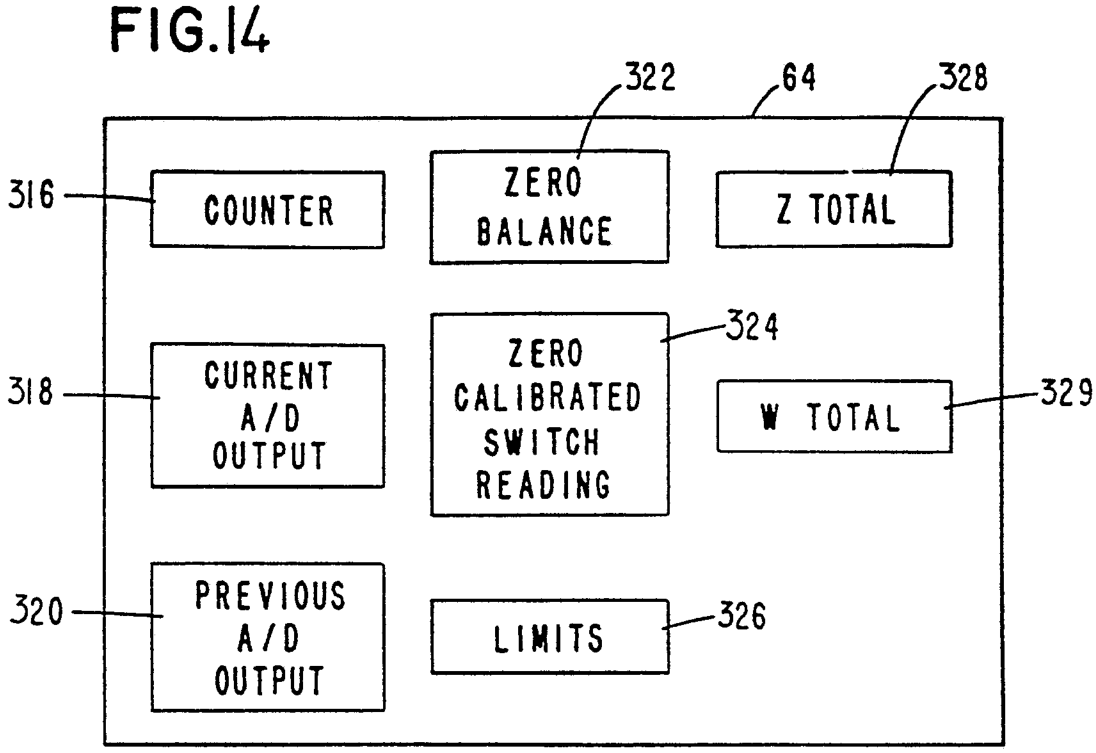
322
64
328
316
COUNTER
ZERO BALANCE
Z TOTAL
324
318
CURRENT A/D OUTPUT
ZERO CALIBRATED SWITCH READING
W TOTAL
329
320
PREVIOUS A/D OUTPUT
LIMITS
326

FIG.15

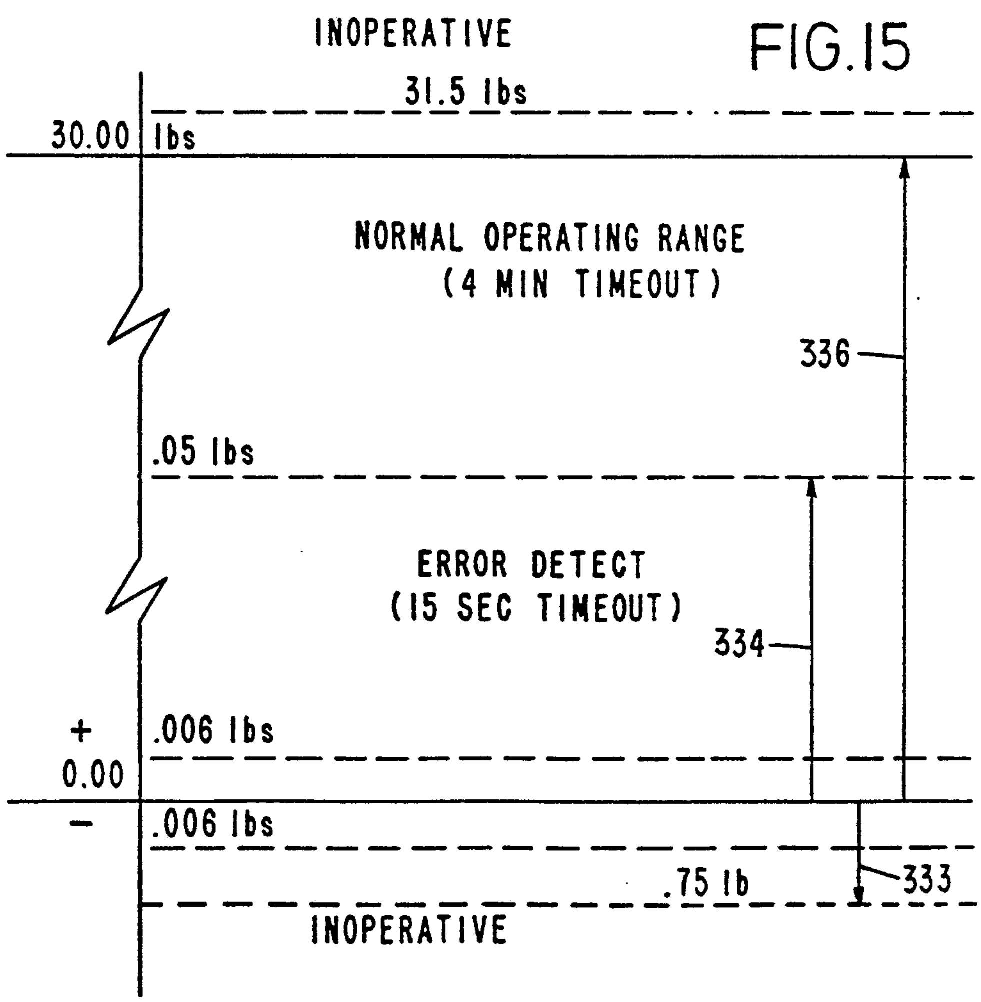
INOPERATIVE
31.5 lbs
30.00 lbs
NORMAL OPERATING RANGE
(4 MIN TIMEOUT)
336
.05 lbs
ERROR DETECT
(15 SEC TIMEOUT)
334
+ .006 lbs
0.00
− .006 lbs
.75 lb
333
INOPERATIVE

FIG. 17A

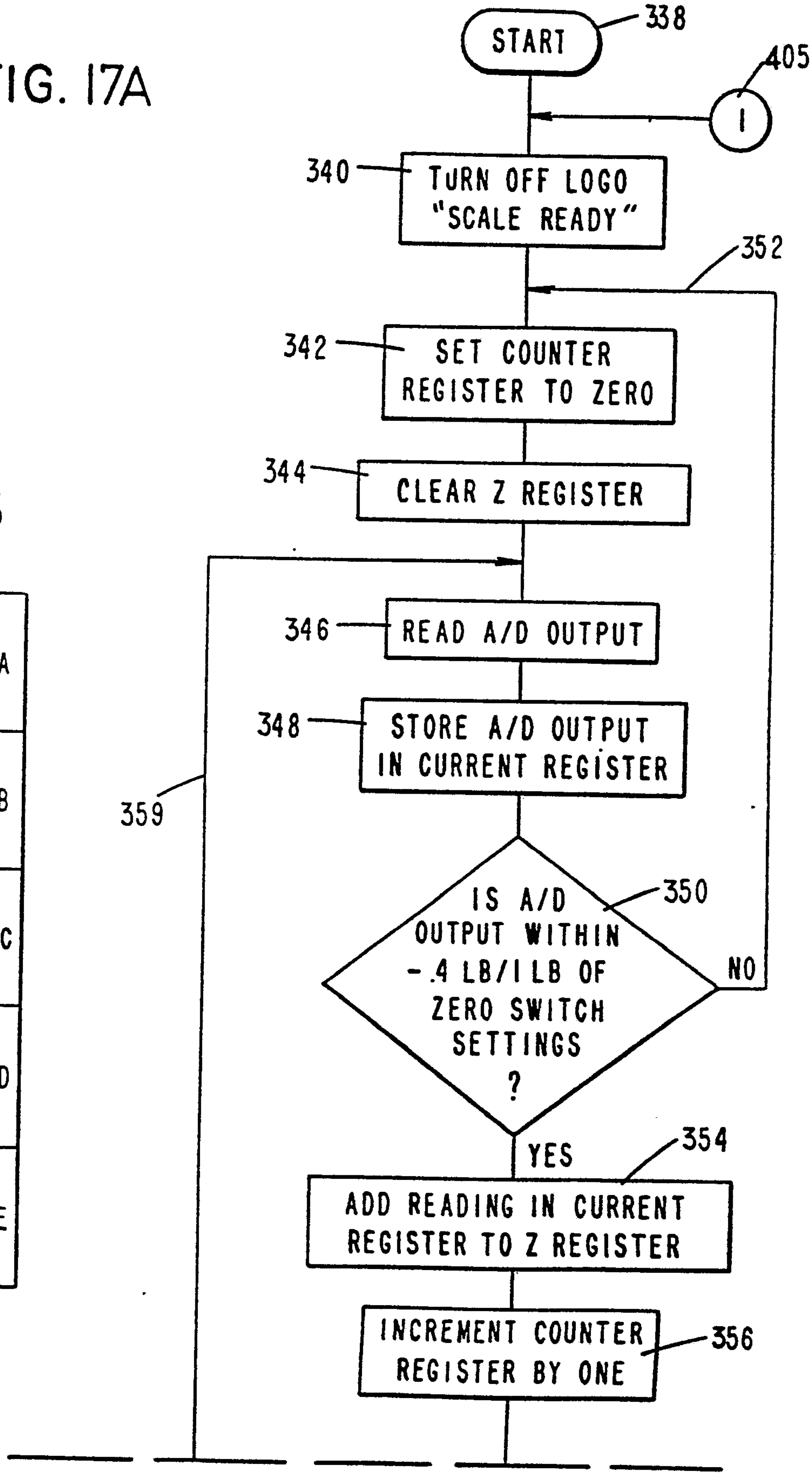


FIG.16

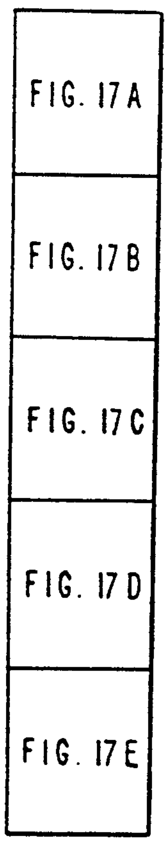

FIG.17B

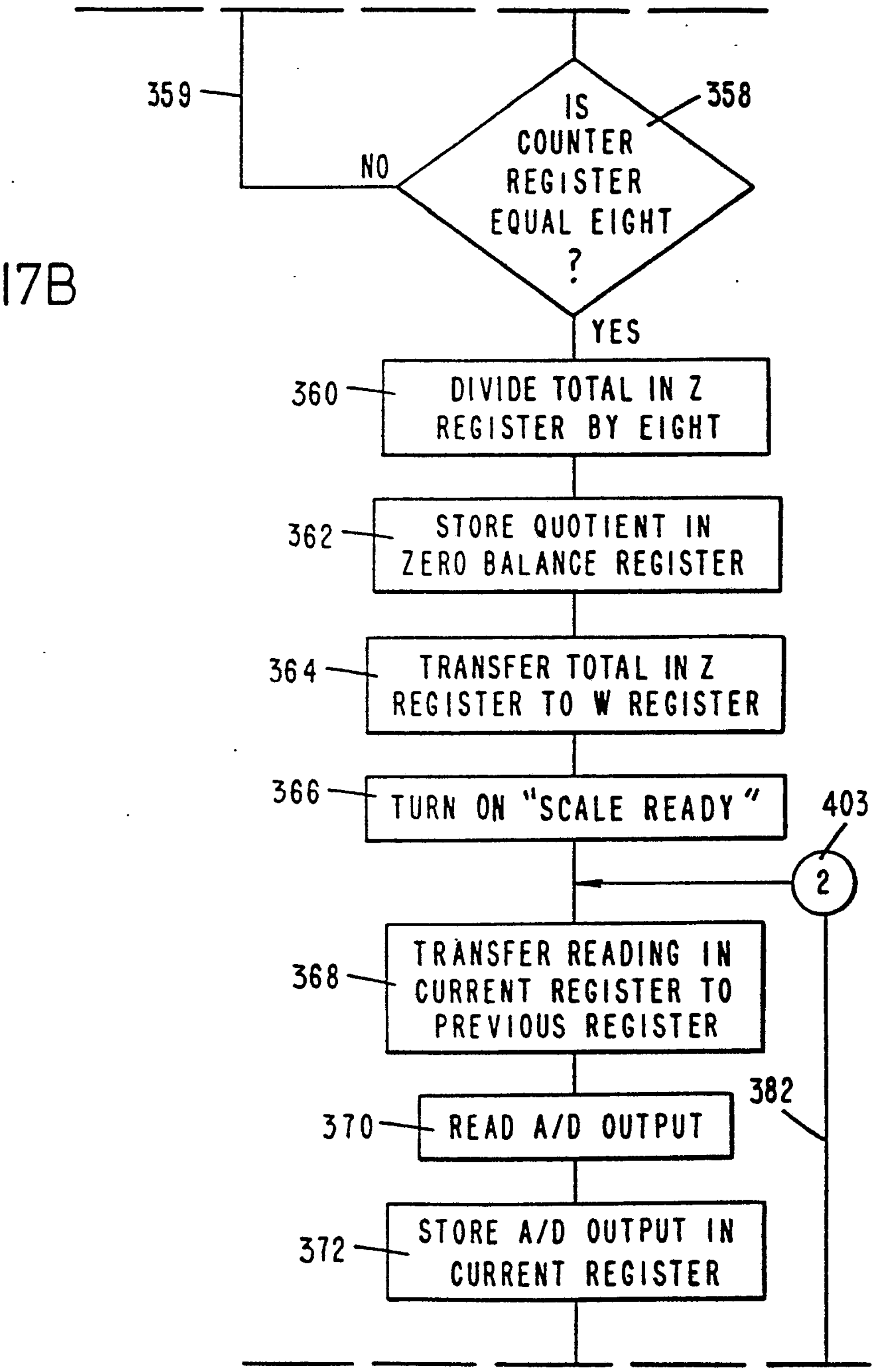
359
NO
IS COUNTER REGISTER EQUAL EIGHT ?
358
YES
360
DIVIDE TOTAL IN Z REGISTER BY EIGHT
362
STORE QUOTIENT IN ZERO BALANCE REGISTER
364
TRANSFER TOTAL IN Z REGISTER TO W REGISTER
366
TURN ON "SCALE READY"
403
2
368
TRANSFER READING IN CURRENT REGISTER TO PREVIOUS REGISTER
382
370
READ A/D OUTPUT
372
STORE A/D OUTPUT IN CURRENT REGISTER

FIG.17C

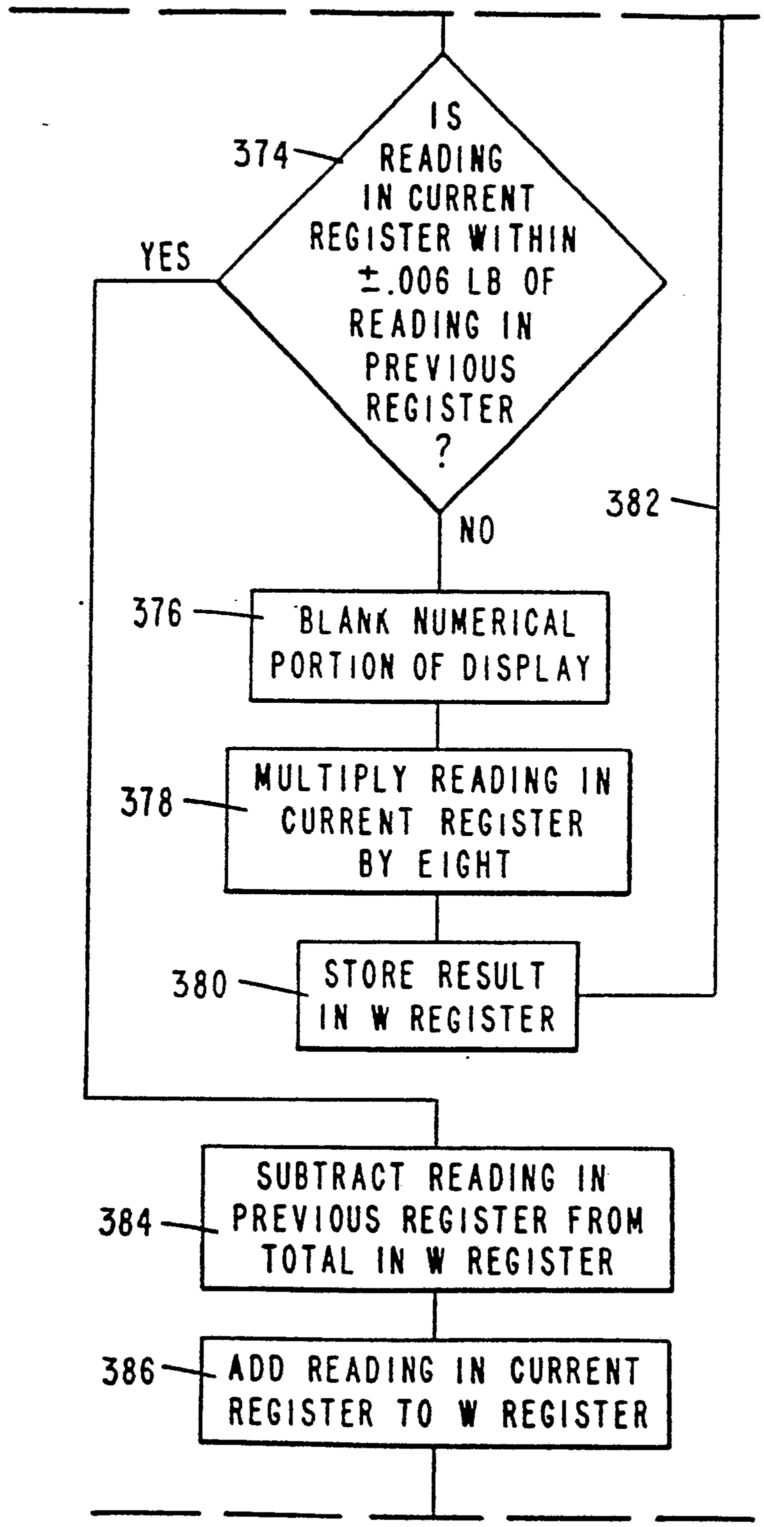
IS READING IN CURRENT REGISTER WITHIN ±.006 LB OF READING IN PREVIOUS REGISTER ?
374
YES
NO
382
376
BLANK NUMERICAL PORTION OF DISPLAY
378
MULTIPLY READING IN CURRENT REGISTER BY EIGHT
380
STORE RESULT IN W REGISTER
384
SUBTRACT READING IN PREVIOUS REGISTER FROM TOTAL IN W REGISTER
386
ADD READING IN CURRENT REGISTER TO W REGISTER

FIG.17D

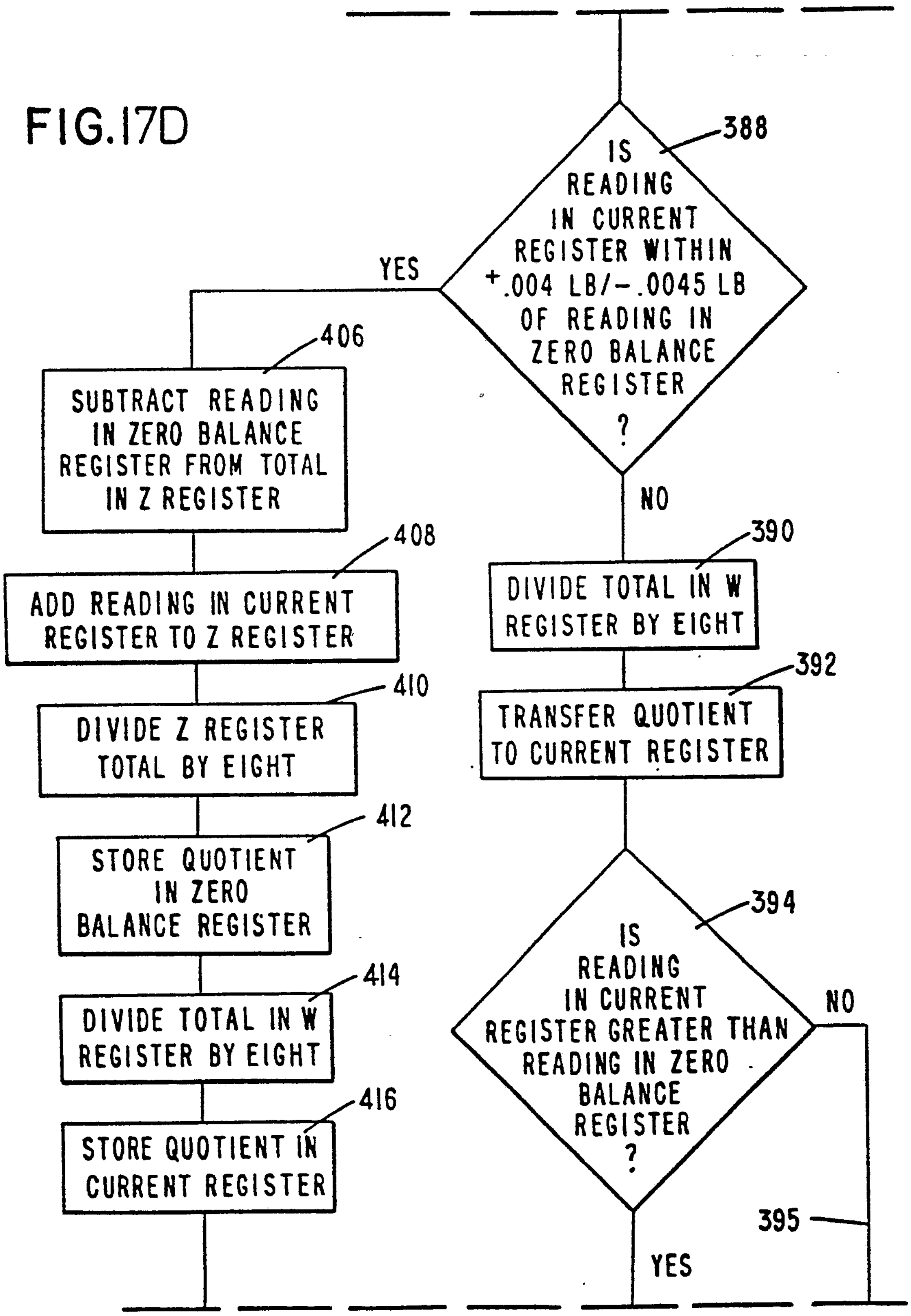
388
IS READING IN CURRENT REGISTER WITHIN +.004 LB/-.0045 LB OF READING IN ZERO BALANCE REGISTER ?
YES
NO
406
SUBTRACT READING IN ZERO BALANCE REGISTER FROM TOTAL IN Z REGISTER
408
ADD READING IN CURRENT REGISTER TO Z REGISTER
410
DIVIDE Z REGISTER TOTAL BY EIGHT
412
STORE QUOTIENT IN ZERO BALANCE REGISTER
414
DIVIDE TOTAL IN W REGISTER BY EIGHT
416
STORE QUOTIENT IN CURRENT REGISTER
390
DIVIDE TOTAL IN W REGISTER BY EIGHT
392
TRANSFER QUOTIENT TO CURRENT REGISTER
394
IS READING IN CURRENT REGISTER GREATER THAN READING IN ZERO BALANCE REGISTER ?
NO
395
YES

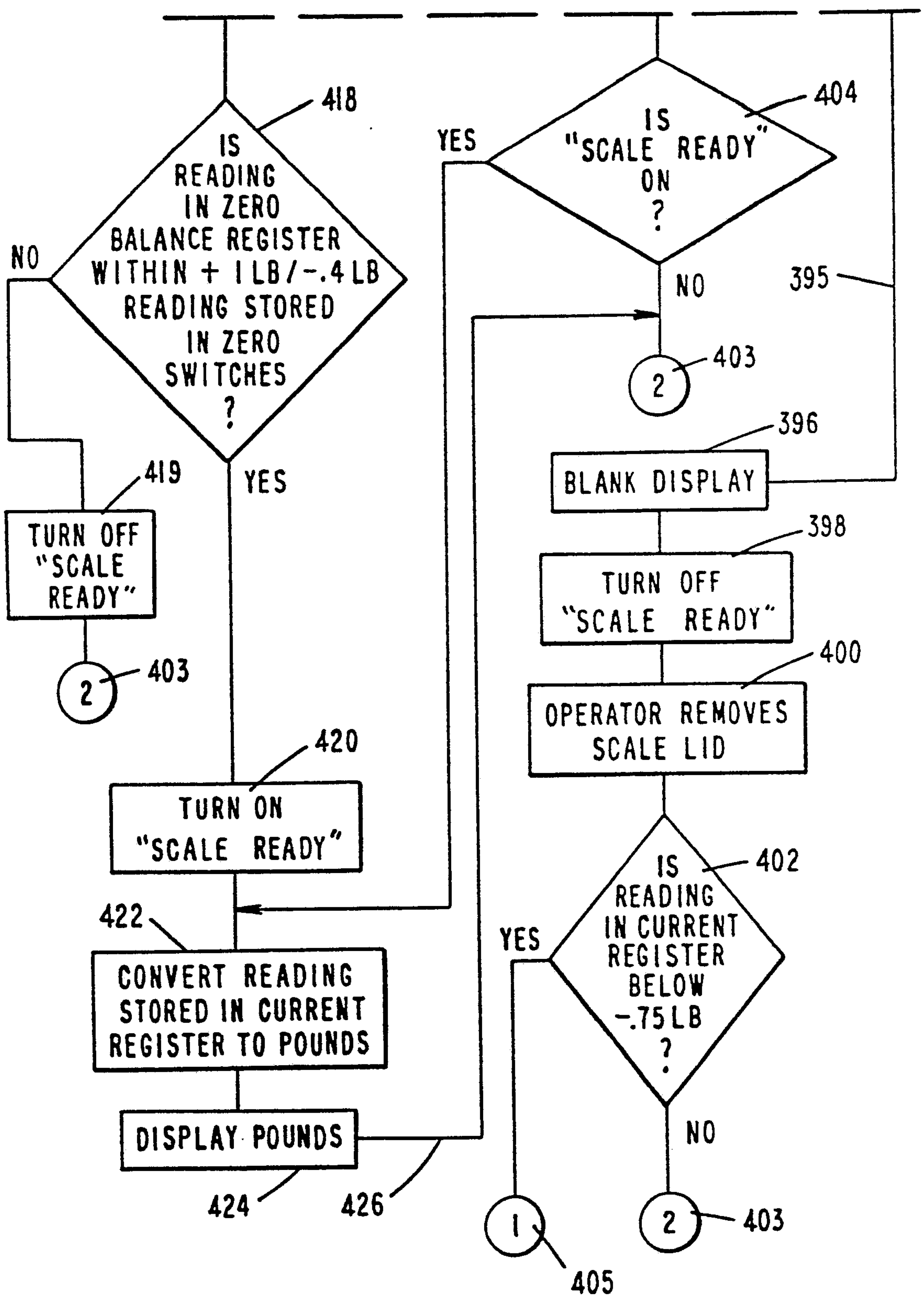
IS READING IN ZERO BALANCE REGISTER WITHIN + 1 LB/-.4 LB READING STORED IN ZERO SWITCHES ?
418
NO
YES
TURN OFF "SCALE READY"
419
2
403
TURN ON "SCALE READY"
420
422
CONVERT READING STORED IN CURRENT REGISTER TO POUNDS
DISPLAY POUNDS
424
426
IS "SCALE READY" ON ?
404
YES
NO
395
2
403
BLANK DISPLAY
396
TURN OFF "SCALE READY"
398
OPERATOR REMOVES SCALE LID
400
IS READING IN CURRENT REGISTER BELOW -.75 LB ?
402
YES
NO
1
405
2
403

FIG.17E

FIG. 18